# EUROPEAN PATENT SPECIFICATION

(11) **EP 4 540 332 B1**
(45) Date of publication and mention of the grant of the patent: **05.11.2025**
(21) Application number: 22758419.0
(22) Date of filing: 11.07.2022
(51) Int. Cl.: C09D 183/04, C09D 133/00

(54) **METHOD OF APPLYING A SEALANT COMPOSITION**
VERFAHREN ZUM AUFTRAGEN EINER DICHTUNGSMITTELZUSAMMENSETZUNG
PROCÉDÉ D'APPLICATION D'UNE COMPOSITION D'ÉTANCHÉITÉ

(43) Date of publication of application: 23.04.2025
(73) Proprietor: Dow Silicones Corporation, Midland, MI 48686-0994 (US)
(72) Inventor: WANG, Xiuyan, Shanghai 201203 (CN); GUO, Yi, Shanghai 201203 (CN); HU, Qiang, Shanghai 201203 (CN); PENG, Jiang, Shanghai 201203 (CN); ZENG, Zhiping, Shanghai 201203 (CN)
(74) Representative: Elkington and Fife LLP
(86) International application number: PCT/CN2022/104889
(87) International publication number: WO 2024/011349

(56) References cited:
- EP-A2- 0 690 100

## Description

This relates to a method of applying a one-part tin catalysed room temperature vulcanisable (RTV) silicone composition onto a hot porous substrate at a temperature of at least 40°C, by first applying a waterborne or solvent borne binder composition on the hot porous substrate at a temperature of at least 40°C to generate a continuous resilient binder film prior to application of the one-part tin catalysed room temperature vulcanisable (RTV) silicone composition. There is also provided a hot porous substrate, at a temperature of at least 40°C, coated with a cured layer of a one-part tin catalysed room temperature vulcanisable (RTV) silicone composition. The porous substrate may for example be a construction material such as stone, marble, brick, concrete, cement and other cementitious substrates.

Room temperature vulcanizable (RTV) silicone rubber compositions (hereinafter referred to as "RTV compositions") are well known. Generally, such compositions comprise an -OH end-blocked diorganopolysiloxane polymer or an alkoxy end-blocked polydiorganosiloxane which may have an alkylene link between the end silicon atoms. They are usually condensation curable and contain one or more suitable cross-linking agents designed to react with the -OH and/or alkoxy groups and thereby cross-link the composition to form an e.g., elastomeric sealant product usually, but not absolutely always, in combination with one or more condensation cure catalysts. One or more additional ingredients such as reinforcing fillers, non-reinforcing fillers, adhesion promotors, diluents (e.g., plasticisers and/or extenders), stabilizers, chain extenders, biocides and the like are often also incorporated into these compositions as and when required. They may be one-part compositions or multiple-part, e.g., two-part compositions.

One-part condensation curing silicone compositions are utilised to generate skin or diffusion cured silicone elastomers used as caulks, sealants, encapsulants and/or adhesives. They are generally designed not to contain any water/moisture in the composition so far as possible, i.e., they are stored in a substantially anhydrous form to prevent premature cure during storage before use. Such one-part condensation curing silicone compositions are applied onto substrates in a layer that is typically thinner than 15 mm. If such compositions are applied in layers thicker than 15 mm it can often lead to uncured material in the depth of the material, because the moisture is very slow to diffuse in very deep sections. Skin or diffusion cure (e.g., moisture/condensation) takes place by the formation of a cured skin at the composition/air interface subsequent to the sealant/encapsulant being applied on to a substrate surface. Subsequent to the generation of the surface skin the cure speed is dependent on the speed of diffusion of moisture from the sealant/encapsulant interface with air to the inside (or core) of the layer of the silicone composition applied, and the diffusion of condensation reaction byproduct/effluent from the inside (or core) to the outside (or surface) of the material and the gradual thickening of the cured skin over time from the outside/surface to the inside/core. The main, if not sole source, of moisture in these compositions are the inorganic fillers, e.g., silica when present. Said fillers may be rendered anhydrous before inter-mixing with other ingredients or water/moisture may be extracted from the mixture during the mixing process to ensure that the resulting sealant composition is substantially anhydrous.

In contrast, multi-part compositions are designed to cure in the bulk of e.g., a silicone sealant once the parts are mixed together and applied onto substrate surface(s). They are stored in at least two parts, but typically two parts, before use to prevent premature cure. Of these multi-part compositions one part contains a filler which typically contains the moisture required to activate condensation cure in the bulk of the product and the cross-linker and catalyst are in the other part(s). Multiple, e.g., two-part condensation cure systems, once mixed together, enable bulk cure even in sections greater than 15 mm in depth. In this case the composition will cure (subsequent to mixing) throughout the material bulk. If a skin is formed, it will be only in the first minutes after application. Soon after, the product will become a solid in the entire mass.

One-part silicone sealant compositions include both acetoxy sealants and neutral oxime sealants. Acetoxy sealants are widely used for domestic applications e.g., on glass and ceramic substrates. However, they release acetic acid during the cure process causing a pungent vinegary aroma and the resulting corrosive nature of the acetic acid produced prevents their use on many substrates in the construction industry.

N neutral oxime sealants were developed in the 1960's as preferred alternatives to acetoxy sealants. Oxime sealant compositions rely upon silicon containing cross-linkers having at least 3 oxime groups per molecule, typically silanes having three or four oxime groups per molecule. Such one-part oxime sealants were typically condensation cured using organo-tin catalysts. Compositions using oxime cross-linkers generate ketoxime by-products, most often methyl ethyl ketoxime (MEKO) (the oxime derivative of methylethylketone) during cure.

HC₃CH₂C(CH₃) = N-OH (MEKO)

These by-products are non-corrosive, enabling such sealants to be used on the construction substrates for example as weather resistant sealants. One of the reasons why the construction industry likes using oxime sealants is the fact that MEKO has a high boiling point of 153°C and a vapour pressure of 3 mmHg at 20°C (both taken from standard texts) and as such is suitable for use in hot countries without deleterious effects during the working day of 40°C when substrate surfaces reach 40°C or greater which can regularly happen when the substrates are in direct sunlight for several hours in the working day. However, whilst they are non-corrosive and have other advantages they are no longer in favour. This is because MEKO has been identified as a carcinogen 1B chemical under European REACH regulations. This has led to the industry seeking to develop replacements for oxime sealants.

From a practical perspective the construction industry prefers one-component compositions to negate the need for mixing ingredients before application and compositions with excellent workability. One alternative which has been developed is a one-part tin catalysed room temperature vulcanisable (RTV) alkoxy silicone sealant composition. Such sealants release alcoholic by-products during the cure process which are substantially non-corrosive.

However, whilst such a composition meets most requirements to replace oxime sealants a problem has been identified when such compositions are being used in hot countries where the atmospheric temperatures reach over 40°C during the working day. There is a gradual increase in bubbling within the curing layer of the one-part room temperature vulcanisable (RTV) silicone composition at the sealant/substrate interface as the environmental temperature and in particular the temperature of the substrate increases in said hot climates when substrate surfaces reach 40°C or greater which can regularly happen when the substrates are in direct sunlight for several hours in the working day. The generation of bubbles in a one-part room temperature vulcanisable (RTV) silicone composition comprising organopolysiloxane polymers having at least two alkoxy groups per molecule and tin (IV)-based catalysts, when the temperature of the substrate is above 40°C is often significant resulting in surface blistering and poor adhesion. Without being bound to current theories it is believed that when these one-part room temperature vulcanisable (RTV) silicone composition are applied onto porous substrates, especially construction materials such as stone, marble, brick, concrete, cement and other cementitious substrates which are generally hydrophilic, at elevated temperatures (e.g., over 40°C), as the substrate temperature increases more and more moisture/water vapor will condense or enrich at the interface of the one-part room temperature vulcanisable (RTV) silicone composition and porous substrate driven by capillary action and reactivity of moisture with the composition. This is believed to cause more and more hydrolyzation of alkoxy silyl groups at the interface and consequently causes an accelerated generation of alcohols especially methanol at the substrate/composition interface. Typically, the alcohols generated, especially methanol have low boiling points at atmospheric pressure and therefore at elevated temperatures methanol generation accelerates at the interface, its speed of generation increasingly exceeds its permeation speed through bulk composition causing bubbling within the curing and eventually cured composition. The bubbles generated are unacceptable as they increase the volume of the cured product by as much as two or three times compared to the equivalent cured product which has cured at room temperature. EP0690 100 describes a method of reducing bubble formation when curing a room temperature vulcanizable silicone sealant composition on a hot porous substrate.

The weather sealing of substrates and other construction processes involving the use of one-part room temperature vulcanisable (RTV) silicone composition such as sealing joints between substrates and/or around windows, window frames and frames and facades and the like, need to be completed during the working day as and when the job requires it and waiting for cooler overnight temperatures is not an option in order to work efficiently. Hence, this can be a major issue for the construction industry particularly for countries with hot climates.

Binders or film formers (hereafter referred to as binders) are film forming components of coatings such as paints which are typically mixed with solvents and a variety of additives to produce a required coating composition. In use, the coating composition is applied onto a substrate and is allowed to dry or cure whilst the solvent evaporates with the binder drying and/or coalescing into a cohesive film coating on the substrate surface.

There is provided herein a method of applying a one-part room temperature vulcanisable (RTV) silicone composition comprising organopolysiloxane polymers having at least two alkoxy groups per molecule and a tin (IV)-based catalyst onto a hot porous substrate at a temperature of at least 40°C comprising the steps of
(i) Applying a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure

   M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions; or a mixture of two or more thereof;
onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two alkoxy groups per molecule and a tin (IV)-based catalyst on the surface of the continuous resilient binder film.

The porous substrates may for example be construction materials such as stone, marble, brick, concrete, cement and other cementitious substrates.

There is also provided a sealed porous substrate which is the product of the above process.

There is also provided herein a hot porous substrate at a temperature of at least 40°C coated with a cured layer of a one-part room temperature vulcanisable (RTV) silicone composition obtained or obtainable by
(i) Applying either
   a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure

   M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions, or a mixture of two or more thereof;
onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two alkoxy groups per molecule and a tin (IV)-based catalyst on the surface of the continuous resilient binder film.

There is also provided a use of
a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions, or a mixture of two or more thereof;
in a method for applying a one-part room temperature vulcanisable (RTV) silicone composition comprising organopolysiloxane polymers having at least two alkoxy groups per molecule and a tin (IV)-based catalyst on to a hot porous substrate at a temperature of at least 40°C comprising the steps of
applying waterborne or solvent borne binder composition comprising at least 25 wt. % of said binder onto the surface of a hot porous substrate at a temperature of at least 40°C;
allowing the waterborne or solvent borne binder composition comprising at least 25 wt. % of said binder to dry and/or cure enabling the binder to coalesce and form a continuous resilient binder film on the hot porous substrate; and then
applying and curing a one-part room temperature vulcanisable (RTV) silicone composition comprising organopolysiloxane polymers having at least two alkoxy groups per molecule and a tin (IV)-based catalyst on the surface of the continuous resilient binder film.

There is also provided a method for filling a space between a first substrate and a second substrate, at least one of which is a hot porous substrate at a temperature of at least 40°C, so as to create a seal therebetween, which seal has a cured layer of a one-part room temperature vulcanisable (RTV) silicone composition comprising:
(i) Applying
   a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane, silicone resin of the structure

   M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions, or a mixture of two or more thereof;
at least partially onto the surface of the hot porous substrate at a temperature of at least 40°C;
(ii) allowing the waterborne or solvent borne binder composition to dry and/or cure enabling the binder to coalesce and form a continuous resilient binder film on at least the hot porous substrate;
   and then
(iii) applying and curing a one-part room temperature vulcanisable (RTV) silicone composition comprising organopolysiloxane polymers having at least two alkoxy groups per molecule and a tin (IV)-based catalyst on the surface of the continuous resilient binder film.

The concept of "comprising" where used herein is used in its widest sense to mean and to encompass the notions of "include" and "consist of".

For the purpose of this application "substituted" means one or more hydrogen atoms in a hydrocarbon group has been replaced with another substituent. Examples of such substituents include, but are not limited to, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amino-functional groups, amidofunctional groups, and cyano-functional groups; sulphur atoms; and sulphur atom containing groups such as mercapto groups.

The one-part room temperature vulcanisable (RTV) silicone composition comprising organopolysiloxane polymers having at least two alkoxy groups per molecule and a tin (IV)-based catalyst satisfies most requirements as a neutral oxime sealant replacement. However, this bubbling effect in hot temperatures is an intrinsic problem for the alkoxy curing sealant when applied directly onto hot porous substrate surfaces which is not encountered in the case of oxime sealants as MEKO has the aforementioned high boiling point of 153°C and a vapour pressure of 3 mmHg at 20°C (both taken from standard texts) which is unlike the alcoholic by-products produced during the cure process of the one-part room temperature vulcanisable (RTV) silicone composition comprising organopolysiloxane polymers having at least two alkoxy groups per molecule and a tin (IV)-based catalyst.

The method described herein comprises bringing the waterborne or solvent borne binder composition into contact with a hot surface of a porous substrate, at a temperature of at least 40°C. and then allowing the waterborne or solvent borne binder composition to dry and/or cure on the substrate surface to form a continuous resilient binder film before applying a one-part room temperature vulcanisable (RTV) silicone composition comprising organopolysiloxane polymers having at least two alkoxy groups per molecule and a tin (IV)-based catalyst onto the continuous resilient binder film on the substrate and then exposing the substrate and sealant composition combination to atmospheric moisture thereby obtaining a silicone sealant or the like bonded to a hot porous substrate.

It was found that this method results in a cured product of a one-part room temperature vulcanisable (RTV) silicone composition comprising organopolysiloxane polymers having at least two alkoxy groups per molecule and a tin (IV)-based catalyst bonded to a hot porous substrate at a temperature of at least 40°C, which cured product contains a reduced number of bubbles compared to an equivalent cured product when applied directly onto the hot substrate surface. In addition to the reduction in the number of bubbles formed, the bubbles, which do form, are smaller in diameter. Hence, we have surprisingly found that the provision of a continuous resilient binder film on the hot porous substrate prior to application of a one-part room temperature vulcanisable (RTV) silicone composition comprising organopolysiloxane polymers having at least two alkoxy groups per molecule and a tin (IV)-based catalyst effectively prevents the capillary action in the substrates, and consequently the production of alcohols at the substrate/ one-part room temperature vulcanisable (RTV) silicone composition interface.

It is important for the resulting continuous resilient binder film produced upon application of the waterborne or solvent borne binder composition on to substrates at a temperature of at least 40°C to be continuous and resilient, i.e., not brittle. The thickness of the film is or is preferably a minimum of 30µm. This can be determined e.g., in a laboratory setting by checking the substrate thickness prior to application of waterborne or solvent borne binder composition and then subsequently checking the thickness of the substrate with the continuous resilient coating film applied and determining the difference. Typically, the thickness of the continuous resilient binder film is in the range of from 30 to 300 µm, alternatively from 50 to 200 µm.

This enables the resulting continuous resilient binder films to physically separate the one-part room temperature vulcanisable (RTV) silicone composition from the hot porous substrate during the curing process on the hot porous substrate at a temperature of at least 40°C.

The waterborne or solvent borne binder composition comprises at least 25 wt. % of a suitable binder. The binder may be any suitable binder selected from (meth)acrylic resin, poly(meth)acrylic acid, polyvinyl acetate, polyvinylpyrrolidone, polyvinyl butyral, polyurethane and silicone resin of the structure

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions, may be utilised.

The binders used e.g., for the sake of example (meth)acrylic resins, may be of any suitable weight average molecular weight, for example a weight average molecular weight in the range of from 10,000 to 5,000,000 g/mole, for example from 20,000 to 1,000,000 g/mole, alternatively from 30,000 to 750,000 g/mole, alternatively from 50,000 to 750,000 g/mole, alternatively from 75,000 to 750,000 g/mole. As used herein, unless otherwise indicated, the phrase "molecular weight" refers to the weight average molecular weight as measured by gel permeation chromatography (GPC) against polystyrene (PS) standards.

(Meth)acrylic-based resins are formed through the polymerization of the esters of acrylic or methacrylic acids along with various specialty (meth)acrylate monomers. The use of the term (meth)acrylate herein is intended to mean both acrylates and methacrylates.

When the binder in the waterborne or solvent borne binder composition comprising at least 25 wt. % of said binder is a (meth)acrylic resin, the (meth)acrylic resin may comprise or consist of particles and/or microparticles of (meth)acrylic polymer resins. Such (meth)acrylic resin particles would have particle size diameter in the range of from 75 to 450 nm, alternatively from 100 to 375nm, alternatively from 115 to 375nm or alternatively from 150 to 300nm. As used herein, unless otherwise indicated, the term "average particle size," with regard to the (meth)acrylic resin means the particle size as determined by light scattering (LS) using a BI-90 particle size analyzer, Brookhaven Instruments Corp. (Holtsville, N.Y.).

The (meth)acrylic resin may be of any suitable weight average molecular weight, for example a weight average molecular weight in the range of from 30,000 to 1,000,000 g/mole, for example from 50,000 to 750,000 g/mole, alternatively from 100,000 to 750,000 g/mole). As used herein, unless otherwise indicated, the phrase "molecular weight" (for (meth)acrylic resin) refers to the weight average molecular weight as measured by gel permeation chromatography (GPC) against polystyrene (PS) standards.

The (meth)acrylic resin may have any suitable glass transition temperature (Tg) for example it may have a Tg in the range of from -50 to 100° C. The meth)acrylic resin may have a pH in the range of from 7 to 10. As used herein, unless otherwise indicated, the term "Tg" or "glass transition temperature" of a polymer, with regard to the (meth)acrylic emulsion and components thereof, refers to the Tg of a polymer calculated by using the Fox equation (T. G. Fox, Bull. Am. Physics Soc., Volume 1, Issue No. 3, page 123 (1956).

Representative, non-limiting examples of commercially produced (meth)acrylic polymer waterborne dispersions useful for the binder of the present disclosure include those sold under the tradenames PRIMAL^{™} SS-640, PRIMAL^{™} AC-339, PRIMAL^{™} E-822K, UCAR^{™} Latex DL 420 G, PRIMAL^{™} AC-337 ER, PRIMAL^{™} CM-330, PRIMAL^{™} AC -285 and PRIMAL^{™} CM-160, RHOPLEX^{™} SG-10, RHOPLEX^{™} EI-2000, RHOPLEX^{™} 78 C and RHOPLEX^{™} EC-1741 (all available from DOW, Inc.) as well as PLEXIGLAS^{™} 6N, PLEXIGLAS^{™} 7N and PLEXIGLAS^{™} 8N from Röhm GmbH of Darmstadt Germany.

For the avoidance doubt a silicone resin according to the present disclosure may be depicted using the following general formula using shorthand (abbreviated) nomenclature:

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 (i.e. a + d cannot be 1) when a, b, c and d are mole fractions and M = (R¹R²R³SiO_{1/2}) D = (R⁴R^{5'}SiO_{2/2}), T = (R⁶SiO_{3/2}) and Q = (SiO_{4/2}) with the resin having a weight-average molecular weight between about 1,000 and about 100,000, on a standard polystyrene basis by gel permeation chromatography.

Each R¹-R⁴, R^{5'} and R^{6'} is independently selected from a monovalent hydrocarbon group, a carbinol group, an alkoxy group (preferably methoxy or ethoxy) or an amino group. Suitable exemplary monovalent hydrocarbon groups include, but are not limited to, alkyl groups such as methyl, ethyl, propyl, pentyl, octyl, undecyl, and octadecyl; alkenyl groups, cycloalkyl groups such as cyclopentyl and cyclohexyl; and aryl groups such as phenyl, tolyl, xylyl, benzyl, and 2-phenylethyl, and any combination thereof.

Suitable alkenyl groups contain from 2 carbon atoms to about 6 carbon atoms and may be exemplified by, but not limited to, vinyl, allyl, and hexenyl. The silicone resin may be a DT resin, an MT resin, an MDT resin, a DTQ resin, an MTQ resin, an MDTQ resin, a DQ resin, a DTQ resin, an MTQ resin, or an MDQ resin, of which DT resins which mainly contain D units (R⁴R⁵SiO_{2/2}) and T units (R⁶SiO_{3/2}). are particularly preferred. MQ resins (where a + d = 1) were not utilised as they were too powdery and were not able to provide a continuous resilient film.

Solutions of the waterborne or solvent borne binder composition may consist solely of binder and solvent, providing the binder/solvent combination was sufficiently viscous to be applied and cured/dried in thick enough layers.

When a waterborne or solvent borne binder composition is waterborne the solvent used is water or substantially i.e., at least 95% water and e.g., a small amount of e.g., an alcohol.

When the waterborne or solvent borne binder composition is a solvent borne binder composition, the binder chosen for use is dissolved in a suitable organic solvent for that specific binder.

Dependent on the binder being utilised the organic solvent may be selected from one or more of the following:-
linear or branched alkanes having from 6 to 16 carbons e.g. hexane, heptane and octane; isoalkanes having from 6 to 16 carbons e.g. isodecane, isododecane and isohexadecane; aromatic hydrocarbons, such as naphtha, benzene, toluene, and xylene; alcohols such as methanol, ethanol, isopropanol, butanol, and n-propanol; aldehydes; ketones such as methylisobutyl ketone, acetone, methylethyl ketone; amines; esters such as tert butyl acetate, methyl acetate, ethyl acetate, n-butyl acetate, methyl formate, isodecyl neopentanoate, isohexyl neopentanoate, ethyl-3 ethoxypropionate, tridecyl neopentanoate, octyldodecyl neopentanoate, diisobutyl adipate, diisopropyl adipate and octyl palmitate; ethers such as octyl ether; glycols such as propylene glycol; glycol ethers such as glycol n-butyl ether, propylene glycol n-butyl ether, propylene glycol dicaprylate/dicaprate, propylene glycol methyl ether, dipropylene glycol methyl ether, propylene glycol n-butyl ether, propylene glycol n-propyl ether, ethylene glycol n-butyl ether and propylene glycol methylether (PGME); glycol esters such as neopentylglycol heptanoate, glycol distearate, propylene glycol methyl ether acetate and propylene glycol methylether acetate (PGMEA); a halogenated hydrocarbon, such as dichloromethane, 1,1,1-trichloroethane and methylene chloride; chloroform; aromatic halides, and other solvents such as dimethyl sulfoxide; dimethyl formamide, acetonitrile; tetrahydrofuran; white spirits; mineral spirits; n-methylpyrrolidone; and the like, as well as derivatives, modifications, and combination thereof.

The binder may be applied onto the hot substrate surface as a waterborne composition comprising water and at least 25 wt. % of said binder in the composition, alternatively from 25 to 75 wt. % of said binder is in the composition alternatively from 27.5 to 75 wt. % of said binder is in the composition.

Alternatively, the binder may be applied in a solvent borne composition comprising a non-aqueous solvent and at least 25 wt. % of said binder in the composition, alternatively from 25 to 75 wt. % of said binder is in the composition alternatively from 27.5 to 75 wt. % of said binder is in the composition.

Optionally one or more additives may be present in the waterborne or solvent borne binder composition binder. These may include, for example, one or more silanes with at least two hydrolyzable groups per molecule, alternatively silane coupling agents (like aminosilane, epoxysilane, thiol silane etc.) and catalysts for example titanates, zirconates and/or aluminum organometallic compounds, and any combination thereof.

In the case of silanes there may be provided one or more silanes with at least two or three hydrolyzable groups per molecule. Any suitable hydrolysable groups may be utilised such as alkoxy groups, acetoxy groups and oximo groups, although alkoxy groups are preferred. The alkoxy groups may be the same or different and typically have from one to 10 carbons, alternatively 1 to 6 carbons, are alternatively methoxy or ethoxy groups. When the silane has two or three hydrolysable groups, e.g., two or three alkoxy groups, each other group is suitably non-hydrolysable silicon-bonded organic group which is typically a hydrocarbyl group which may be substituted by halogen such as fluorine and chlorine. Examples of such other groups include alkyl groups (for example methyl, ethyl, propyl, and butyl); cycloalkyl groups (for example cyclopentyl and cyclohexyl); alkenyl groups (for example vinyl and allyl); aryl groups (for example phenyl, and tolyl); aralkyl groups (for example 2-phenylethyl) and groups obtained by replacing all or part of the hydrogen in the preceding organic groups with halogen. Preferably however, each other silicon-bonded organic group is preferably an alkyl group having 1 to 6 carbons such as methyl or ethyl groups or an alkenyl group having from 2 to 6 carbons such as a vinyl group.

Specific examples of silanes which may be incorporated as additives in said waterborne or solvent borne binder composition include but are not limited to, alkyltrialkoxysilanes such as methyltrimethoxysilane (MTM) ethyltrimethoxysilane and methyltriethoxysilane, alkenyltrialkoxy silanes such as vinyltrimethoxysilane and vinyltriethoxysilane, isobutyltrimethoxysilane (iBTM). Other suitable silanes include, phenyltrimethoxysilane, alkoxytrioximosilane, alkenyltrioximosilane, 3,3,3-trifluoropropyltrimethoxysilane, methyltris(methylethylketoximo)silane, vinyl-tris-methylethylketoximo)silane, methyltris(methylethylketoximino)silane, methyltris(isopropenoxy)silane, vinyltris(isopropenoxy)silane, (ethylenediaminepropyl)trimethoxysilane, vinyl trimethoxysilane, tetraalkylorthosilicate having the general formula SiOR₄, tetraethoxysilane, mercapto functional-silanes, glycidyloxypropyl trimethoxysilane, and any combination thereof.

In the case of titanates, zirconates and/or aluminum organometallic compounds, or any combination thereof, the titanates may include, but are not limited to, tetrabutyl titanate, tetrapropoxy titanate, tetraethoxy titanate, tetraamyl titanate, titanium di-isopropoxy bis ethylacetoacetate, titanium di-isopropoxy bis acetylacetonate, and any combination thereof; the zirconates may include, but are not limited to, zirconium acetylacetonate and the aluminum organometallic compounds may be but is not limited to, aluminum acetylacetonate.

In one embodiment, the waterborne or solvent borne binder composition may be a primer composition providing the binder utilised is present in an amount of at least 25 wt. % of said primer composition, alternatively the binder is present in an amount of from 25 to 75 wt. % of the primer composition alternatively the binder is present in an amount of from 27.5 to 75 wt. % of the primer composition.

A primer is a preparatory coating applied on to a substrate and allowed to dry and/or cure to provide improved adhesion between the substrate and a coating subsequently applied thereon. The primer is intended to provide enhanced adhesion between said substrate and the coating. However, the use of primers is often not preferred because they can be unreliable, can have quality control and reliability issues and traditionally contain high proportions of organic solvents which evaporate during the drying/curing process often resulting in undesirable volatile organic compound (VOC) environmental issues.

A small number of commercial primers comprise at least 25 wt. % binder in the primer composition. Such primers are designed to be film forming and adhesion promoting for room temperature vulcanisable (RTV) silicone compositions when applied on substrates at room temperature i.e., typically between 20 and 25°C). However, these are not usually required for the adhesion of cured silicone materials to porous substrates such as stone, marble, brick, concrete, cement and other cementitious substrates at room temperature. Furthermore, there is no teaching of a need apply primers to porous substrates such as stone, marble, brick, concrete, cement and other cementitious substrates at temperatures of at least 40°C and it is believed no prior art suggesting that the application of such primer compositions on substrates at a temperature of at least 40°C would prevent or substantially prevent the bubbling issues in one-part room temperature vulcanisable (RTV) silicone compositions comprising organopolysiloxane polymers having at least two alkoxy groups per molecule and a tin (IV)-based catalyst which occur at those temperatures. Therefore, the method described herein was a surprising development which appears to solve a major issue in hot countries. Without being tied to current theories it is believed that applying the waterborne or solvent borne binder composition leads to the formation of a resilient binder film which blocks pores on the substrate surface and consequently prevents the bubbling effect when a one-part room temperature vulcanisable (RTV) silicone composition comprising organopolysiloxane polymers having at least two alkoxy groups per molecule and a tin (IV)-based catalyst is later applied on top of the resilient binder film.

In a further embodiment, it was identified that, if desired, a predetermined amount of binder could be introduced into a primer composition to form a waterborne or solvent borne binder composition comprising at least 25 wt. % of binder in the primer composition, the binder being selected from (meth)acrylic resin, poly(meth)acrylic acid, polyvinyl acetate, polyvinylpyrrolidone, polyvinyl butyral, polyurethane or a silicone resin of the structure

M₍ₐ₎D_{(b)}T_{(c)}Q_{(d)}

Where 0<a<1, b≥0, c ≥ 0, d ≥ 0, c + d is >0, a + b + c + d= 1, and a + d ≠ 1 when a, b, c and d are mole fractions, or a mixture thereof. The adhesive properties of the waterborne or solvent borne binder composition, when comprising primers or modified primers, containing additional binder, are considered superfluous for this application providing that when applied on to a hot porous substrate at 40°C, the modified primer composition is able to form a suitable continuous resilient binder film. Any suitable primers may be utilised for this application, providing they contain the pre-requisite amount of binder (at least 25 wt. %) in the composition thereof or they may be modified to do so. Such primers may be waterborne or solvent borne. In the case of solvent borne primers the solvents may be any of those listed above for use in binder compositions. They may contain a wide variety of other ingredients, for example one or more silanes with at least three hydrolyzable groups per molecule and catalysts for example titanates, zirconates and/or aluminum organometallic compound as described above. They may additionally include one or more organotin compounds such as but not limited to, alkyltin ester compounds such as dibutyltin dioctoate, dibutyltin dimaleate, butyltin 2-ethylhexoate dimethyl tin di-neodecyl ester, or dibutyltin dilaurate, dibutyl tin acetate and dibutyl tin 2-ethyl hexanoate, and any combination thereof.

Any suitable silicone sealant primer suitable for priming the porous substates described herein, namely construction and/or building materials which are used to form the exterior of buildings such as concrete, marble, brick and stone may be used as the waterborne or solvent borne binder composition herein. For example, commercial primers which may be used include DOWSIL^{™} Construction Primer B, and DOWSIL^{™} Construction Primer P and commercial primers which may be used as the waterborne or solvent borne binder composition upon modification with the addition of binder may include DOWSIL^{™} 1200 OS Primer and DOWSIL^{™} Primer-C all of which are commercially available from Dow Silicones Corporation of Midland Michigan USA. Preferably when commercial primers are being modified, the binder(s) being added to the primer and the primer itself are miscible in the combination utilised.

In step (i) of the process described above, the waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane or a silicone resin as depicted above or a mixture of two or more thereof, is applied onto the surface of a hot porous substrate at a temperature of at least 40°C. The hot porous substates are construction and/or building materials which are used to form the exterior of buildings such as stone, marble, brick, concrete, cement and other cementitious substrates, e.g., in the case of stone the substrate may be a stone façade which can be heated to temperatures much greater than 40°C in direct sunlight.

Any suitable silicone sealant primer suitable for priming the porous substates described herein, namely construction and/or building materials which are used to form the exterior of buildings such as concrete, marble, brick and stone may be used in this disclosure. The said waterborne or solvent borne binder composition is brought into contact with the hot porous surface by conventional means such as by extrusion, coating, injection, knifing, wiping and rolling. The surface of the porous substrate is at a temperature of at least 40°C.

The binder composition may be prepared by mixing the binder and a selected solvent together and simultaneously or subsequently introducing any additional ingredients. Alternatively, if the waterborne or solvent borne binder composition being used is a modified primer composition, a predetermined amount of binder can be mixed into the primer composition to ensure that the binder composition applied on to the hot porous substrate surface at a temperature of at least 40°C comprises at least 25 wt. % of binder in the modified primer composition. The resulting binder composition may be in the form of a solution, an emulsion or a dispersion depending on the solubility of the other ingredients in the solvents.

In step (ii) of the process the waterborne or solvent borne binder composition is allowed to dry and/or cure enabling the binder to coalesce and form a continuous resilient binder film on the hot porous substrate. The resulting continuous resilient binder film incorporates all non-volatile components of the waterborne or solvent borne binder composition and as such if a modified primer is being used all non-volatile components of the modified silicone sealant primer. Indeed, it is possible, that one or more of the ingredients of the waterborne or solvent borne binder composition being applied as herein may react with the binder during the formation of the continuous resilient binder film. No method of heating etc. is required to dry/cure the waterborne or solvent borne binder composition given the temperature of the hot porous substrate and caused by the sun/air in the vicinity of the substrate. The climatic elevated temperatures will in fact accelerate the drying/curing period compared to when dried/cured at e.g., temperatures between 20 and 25°C.

In step (iii) a one-part room temperature vulcanisable (RTV) silicone composition comprising organopolysiloxane polymers having at least two alkoxy groups per molecule and a tin (IV)-based catalyst is applied and cured on the surface of the continuous resilient binder film resulting from step (ii). It is applied on top of the continuous resilient binder film and then is allowed to cure at the environmental temperature at the time of application. The method herein prevents or minimises unwanted bubbling issues when applying the one-part room temperature vulcanisable (RTV i.e., typically between 20 and 25°C) silicone compositions on hot porous substrates at temperatures of greater than 40°C because the continuous resilient binder film produced by application of the waterborne or solvent borne binder composition on the hot porous substrate surface will effectively insulate the one-part room temperature vulcanisable (RTV) silicone compositions comprising organopolysiloxane polymers having at least two alkoxy groups per molecule and a tin (IV)-based catalyst from the surface of the substrate and prevent direct contact between the substrate surface and the one-part room temperature vulcanisable (RTV) silicone composition during the curing process when the bubbling occurs.

Most one-part room temperature vulcanisable (RTV) silicone compositions having at least two alkoxy groups per molecule and a tin (IV)-based catalyst typically comprise a minimum of four ingredients
1. organopolysiloxane polymers having at least two alkoxy groups per molecule, often at least two trialkoxy-silyl terminal groups per molecule;
2. One or more suitable cross-linker(s);
3. filler; and
4. tin (IV)-based catalysts.

The one-part room temperature vulcanisable (RTV) silicone compositions having at least two alkoxy groups per molecule and a tin (IV)-based catalyst often also comprise a variety of additives which are incorporated in the composition to meet necessary properties required by the applicant/construction business with which they are being used. Such additives often include one or more of adhesion promotors, diluents (e.g., plasticisers and/or extenders), chain extenders, flame retardants, solvent resistant additives, biocides and the like are often also incorporated into these compositions as and when required.

One advantage of the current method is that by preparing a continuous resilient binder film on the hot porous substrate prior to application of a one-part room temperature vulcanisable (RTV) silicone composition having at least two alkoxy groups per molecule and a tin (IV)-based catalyst, any suitable one-part room temperature vulcanisable (RTV) silicone composition comprising organopolysiloxane polymers having at least two alkoxy groups per molecule and a tin (IV)-based catalyst may be applied onto the hot porous substrate at a temperature of at least 40°C. One example of a typical one-part room temperature vulcanisable (RTV) silicone composition comprising organopolysiloxane polymers having at least two alkoxy groups per molecule and a tin (IV)-based catalyst is provided below, but it is to be understood that such a composition is being provided merely as an example of the sort of compositions which might be selected for use and is in no way intended to be restrictive on the scope of the one-part room temperature vulcanisable (RTV) silicone compositions comprising organopolysiloxane polymers having at least two alkoxy groups per molecule and a tin (IV)-based catalyst which may now be applied onto the hot porous substrates given this new process. A one-part room temperature vulcanisable (RTV) silicone composition having at least two alkoxy groups per molecule and a tin (IV)-based catalyst can be as follows:-
(I) Organopolysiloxane polymers having at least two alkoxy groups per molecule, often at least two trialkoxy-silyl terminal groups per molecule; for example an organopolysiloxane polymer having at least two hydroxyl or hydrolysable groups per molecule of the formula

   X₃₋ₙRₙSi-Z- (R¹_{y}SiO_{(4-y)/2})_{z}-SiR¹₂ -Z-Si-RₙX₃₋ₙ (1)

   in which each X is independently a hydroxyl group or an alkoxy group, each R is an alkyl, alkenyl or aryl group, each R¹ is an X group, alkyl group, alkenyl group or aryl group and Z is a divalent organic group;
   n is 0 or 1, y is 0, 1 or 2, and preferentially 2 and z is an integer such that said organopolysiloxane polymer has a viscosity of from 30,000 to 150,000 mPa.s at 25°C, in an amount of from 30 to 90% by weight of the composition;
(II) A suitable cross-linker having three or more hydrolysable groups per molecule,
(III) A filler selected from precipitated silica, fumed silica or precipitated calcium carbonate or a mixture of two or more thereof;
(IV) a tin (IV)-based catalyst.

### Organopolysiloxane polymer having at least two alkoxy groups per molecule (I)

The organopolysiloxane polymer having at least two alkoxy groups per molecule (I) has the following formula

X₃₋ₙRₙSi-Z- (R¹_{y}SiO_{(4-y)/2})_{z}-SiR¹₂ -Z-Si-RₙX₃₋ₙ (1)

In the above formula each X is independently a hydroxyl group or an alkoxy group, providing that each polymer contains at least two alkoxy groups. In one embodiment all X groups may be the same or different alkoxy groups. Preferably said alkoxy group has between 1 and 10 carbons, Illustrative alkoxy groups are methoxy, ethoxy, propoxy, isopropoxy, n-butoxy, t-butoxy, isobutoxy, pentoxy, hexoxy and 2-ethylhexoxy; dialkoxy groups, such as methoxymethoxy or ethoxymethoxy and alkoxyaryloxy, such as ethoxyphenoxy groups; alternatively, each X is an alkoxy group having from one and six carbons, alternatively having from one and four carbons or alternatively is a methoxy or ethoxy group.

Each R group is an alkyl, alkenyl or aryl group, alternatively each R is an alkyl group having from 1 to 6 carbons, an alkenyl group having from 2 to 6 carbons such as vinyl, allyl and hexenyl groups or an aryl group having from 6 to 12 carbons; alternatively each R is an alkyl group having from 1 to 6 carbons, or an aryl group having from 6 to 12 carbons; alternatively each R is an alkyl group having from 1 to 6 carbons, alternatively each R is an ethyl group or a methyl group. In one embodiment R may include substituted aliphatic organic groups such as 3,3,3-trifluoropropyl groups aminoalkyl groups, polyaminoalkyl groups, and/or epoxyalkyl groups.

Each R¹ is an X group, or an R group, with the proviso that cumulatively at least two X groups and/or R¹ groups per molecule are alkoxy groups.alternatively each R¹ is an R group. It is possible that some R¹ groups may be siloxane branches off the polymer backbone which branches may have terminal groups as hereinbefore described.

Each Z is a divalent organic group, typically an alkylene having from 2 to 10 carbons, such as for example, an ethylene, propylene, butylene, pentylene and/or hexylene group; alternatively, an alkylene group having 2 to 6 carbons, alternatively an alkylene group having from 2 to 5 carbons. Subscript n is zero or 1, alternatively is zero; each subscript y is 0, 1 or 2, and preferably 2. Whilst y is 0, 1 or 2, substantially y= 2, e.g., at least 90%, alternatively 95% of R¹_{y}SiO_{(4-y)/2} groups are characterized with y = 2. Subscript z is an integer such that said organopolysiloxane polymer has a viscosity of from 30,000 to 150,000 mPa.s, alternatively from 40,000 to 140,000mPa.s at 25°C, therefore z is an integer from 300 to 2000.

The viscosity of component (I) may be measured by any suitable method such as in accordance with corporate test method CTM 0050, which is publicly available, and which is based on ASTM D 1084-16 method B, using a Brookfield DV-III Ultra Rheometer equipped with a cone-and-plate geometry using spindle 52 at 5 rpm for 2min.

,Component (I) is present in the one-part room temperature vulcanisable (RTV) silicone composition in an amount of from 30 to 90 wt. % of the composition, alternatively 35 to 75%, alternatively 35 to 60 wt. % of the composition.

Organopolysiloxane polymer (I) can be a single siloxane represented by Formula (1) or it can be mixtures of organopolysiloxane polymers represented by the aforesaid formula. Hence, it may be a "siloxane polymer mixture" so organopolysiloxane polymer (I) is meant to include any individual organopolysiloxane polymer (I) or mixtures of organopolysiloxane polymer (I).

The Degree of Polymerization (DP), (i.e., in the above formula substantially z), is usually defined as the number of monomeric units in a macromolecule or polymer or oligomer molecule of silicone. Synthetic polymers invariably consist of a mixture of macromolecular species with different degrees of polymerization and therefore of different molecular weights. There are different types of average polymer molecular weight, which can be measured in different experiments. The two most important are the number average molecular weight (Mn) and the weight average molecular weight (Mw). The Mn and Mw of a silicone polymer can be determined by gel permeation chromatography (GPC) with precision of about 10-15% using polystyrene standards.

This technique is standard and yields Mw, Mn and polydispersity index (PI). The degree of polymerisation (DP) =Mn/Mu where Mn is the number-average molecular weight coming from the GPC measurement and Mu is the molecular weight of a monomer unit. PI=Mw/Mn. The DP is linked to the viscosity of the polymer via Mw, the higher the DP, the higher the viscosity. In the present disclosure the number average molecular weight and weight average molecular weight values of component (I) herein may, for example, be determined using a Waters 2695 Separations Module equipped with a vacuum degasser, and a Waters 2414 refractive index detector (Waters Corporation of MA, USA). The analyses may then be performed using certified grade toluene flowing at 1.0 mL/min as the eluent. Data collection and analyses may be performed using Waters Empower GPC software.

The polymer (I) may be made by any suitable route for example by preparing an alkoxy-terminated polydiorganosiloxane from a silanol-terminated polydiorganosiloxane starting material comprising:-Step (i) reacting said silanol terminated polydiorganosiloxane starting material with one or more polyalkoxy silane starting material(s) in the presence of a basic end-capping catalyst starting material; and subsequent to step (i), step (ii) adding an acidic stabilizing/neutralising agent selected from
one or more fatty acids having from 8 to 26 carbons;
an alkane sulphonic acid having from 1 to 10 carbons;
acidic fumed silica and/or
one or more acidic liquid polybutadienes or a mixture thereof.

### A suitable cross-linker having three or more alkoxy groups per molecule (II)

Component (II) is one or more cross-linkers comprising a silicon containing compound having at least three alkoxy groups per molecule which are reactive with the alkoxy and optionally hydroxyl groups in component (I).

The silicon containing compound having at least at least three alkoxy groups per molecule of component (II) may be for example:
one or more silanes having at least 3 hydrolysable groups per molecule group;
one or more dipodal silanes having at least 2 silyl groups, each silyl group containing at least one hydrolysable group or
other suitable silicon containing compounds having at least three hydroxyl and/or hydrolysable groups per molecule.

For the sake of the disclosure herein a dipodal silanes comprises two silicon atoms each having at least one hydrolysable group, where the silicon atoms are separated by an organic polymer chain or a siloxane polymer chain or a copolymer chain. Typically, each silyl group on the dipodal silanes may be a terminal group.

The hydrolysable groups of component (II) may be selected from acyloxy groups (for example, acetoxy, octanoyloxy, and benzoyloxy groups); ketoximino groups (for example dimethyl ketoximo, and isobutylketoximino); alkoxy groups (for example methoxy, ethoxy, and propoxy) and alkenyloxy groups (for example isopropenyloxy and 1-ethyl-2-methylvinyloxy). In some instances, the hydrolysable group may include hydroxyl groups. Alternatively, said hydrolysable groups are selected from acyloxy groups; alkoxy groups and/ alkenyloxy groups. In a preferred embodiment the hydrolysable groups are alkoxy groups having from 1 to 10 carbons.

Hence, when component (II) is a silane, the silane may have the following structure

R⁸ⱼSi(OR⁹)₄₋ⱼ

where each R⁹ may be the same or different and is hydrogen or an alkyl group containing at least one carbon, alternatively from 1 to 20 carbons, alternatively from 1 to 10 carbons alternatively from 1 to 6 carbons. The value of j is 0 or 1. Whilst each R⁹group may be the same or different, it is preferred that at least two R⁹ groups are the same, alternatively at least three R⁹ groups are the same and alternatively, when j is 0, all R⁹ groups are the same.

Hence, specific examples of the reactive silane (II) when j is zero include tetraethylorthosilicate, tetrapropylorthosilicate, tetra n-butylorthosilicate and tetra t-butylorthosilicate.

When j is 1 the group R⁸ is present. R⁸ is a silicon-bonded organic group selected from a substituted or unsubstituted straight or branched monovalent hydrocarbon group having at least one carbon, a cycloalkyl group, an aryl group, an aralkyl group or any one of the foregoing wherein at least one hydrogen atom bonded to carbon is substituted by a halogen atom, or an organic group having an epoxy group, a glycidyl group, an acyl group, a carboxyl group, an ester group, an amino group, an amide group, a (meth)acryl group, a mercapto group, an isocyanurate group or an isocyanate group.

Unsubstituted monovalent hydrocarbon groups, suitable as R⁸, may include alkyl groups e.g., methyl, ethyl, propyl, and other alkyl groups, alkenyl groups such as vinyl, cycloalkyl groups may include cyclopentane groups and cyclohexane groups. Substituted groups suitable in or as R⁸, may include, for the sake of example, 3-hydroxypropyl groups, 3-(2-hydroxyethoxy)alkyl groups, halopropyl groups, 3-mercaptopropyl groups, trifluoroalkyl groups such as 3,3,3-trifluoropropyl, 2,3-epoxypropyl groups, 3,4-epoxybutyl groups, 4,5-epoxypentyl groups, 2-glycidoxyethyl groups, 3-glycidoxypropyl groups, 4-glycidoxybutyl groups, 2-(3,4-epoxycyclohexyl) ethyl groups, 3-(3,4-epoxycyclohexyl)alkyl groups, aminopropyl groups, N-methylaminopropyl groups, N-butylaminopropyl groups, N,N-dibutylaminopropyl groups, 3-(2-aminoethoxy)propyl groups, methacryloxyalkyl groups, acryloxyalkyl groups, carboxyalkyl groups such as 3-carboxypropyl groups, 10-carboxydecyl groups.

Specific examples of suitable silane cross-linkers having at least 3 hydroxyl and/or hydrolysable groups per molecule (II), include but are not limited to vinyltrimethoxysilane, methyltrimethoxysilane, ethyltriethoxysilane, ethyltrimethoxysilane, propyltriethoxysilane, isobutyltriethoxysilane, isobutyltrimethoxysilane, vinyltriethoxysilane, phenyltriethoxysilane, phenyltrimethoxysilane, methyltris(isopropenoxy)silane or vinyltris(isopropenoxy)silane, 3-hydroxypropyl triethoxysilane, 3-hydroxypropyl trimethoxysilane, 3-(2-hydroxyethoxy)ethyltriethoxysilane, 3-(2-hydroxyethoxy)ethyltrimethoxysilane, chloropropyl triethoxysilane, 3-mercaptopropyl triethoxysilane, 3,3,3-trifluoropropyl triethoxysilane, 2,3-epoxypropyl triethoxysilane, 2,3-epoxypropyl trimethoxysilane, 3,4-epoxybutyl triethoxysilane, 3,4-epoxybutyl trimethoxysilane, 4,5-epoxypentyl triethoxysilane, 4,5-epoxypentyl trimethoxysilane, 2-glycidoxyethyl triethoxysilane, 2-glycidoxyethyl trimethoxysilane, 3-glycidoxypropyl triethoxysilane, 3-glycidoxypropyl trimethoxysilane, 4-glycidoxybutyl triethoxysilane, 4-glycidoxybutyl trimethoxysilane, 2-(3,4-epoxycyclohexyl) ethyl triethoxysilane, 3-(3,4-epoxycyclohexyl)ethyl triethoxysilane, aminopropyl triethoxysilane, aminopropyl trimethoxysilane, N-methylaminopropyl triethoxysilane, N-methylaminopropyl trimethoxysilane, N-butylaminopropyl trimethoxysilane, N,N-dibutylaminopropyl triethoxysilane, 3-(2-aminoethoxy)propyl triethoxysilane, methacryloxypropyl triethoxysilane, tris(3-triethoxysilylpropyl) isocyanurate, acryloxypropyl triethoxysilane, 3-carboxypropyl triethoxysilane and 10-carboxydecyl triethoxysilane.

In a further embodiment component (II) may be a dipodal silane i.e., a silyl functional molecule having at 2 silyl groups each having at least 1 and up to 3 hydrolysable groups, alternatively each silyl group has at least 2 hydrolysable groups wherein the silyl groups are separated by a polymeric backbone. The polymeric backbone may be an organic polymeric backbone i.e., component (II) may comprise organic based polymers with silyl terminal groups e.g., silyl polyethers, silyl acrylates and silyl terminated polyisobutylenes. In the case of silyl polyethers the polymer chain is based on polyoxyalkylene based units. Such polyoxyalkylene units preferably comprise a linear predominantly oxyalkylene polymer comprised of recurring oxyalkylene units, (-CₙH₂ₙ-O-) illustrated by the average formula (-CₙH₂ₙ-O-)_{y} wherein n is an integer from 2 to 4 inclusive and y is an integer of at least four. Likewise, the viscosity will be ≤ 1000 at 25°C mPa.s, alternatively 250 to 1000mPa.s at 25°C alternatively 250 to 750mPa.s at 25°C and will have a suitable number average molecular weight of each polyoxyalkylene polymer block present. The viscosity may be measured using any suitable means e.g., a Modular Compact Rheometer (MCR) 302 from Anton Paar GmbH of Graz, Austria using the most suitable settings and plates for the viscosity concerned as described above. Moreover, the oxyalkylene units are not necessarily identical throughout the polyoxyalkylene monomer but can differ from unit to unit. A polyoxyalkylene block or polymer, for example, can be comprised of oxyethylene units, (-C₂H₄-O-); oxypropylene units (-C₃H₆-O-); or oxybutylene units, (-C₄H₈-O-); or mixtures thereof.

In the case of such organic based cross-linkers the molecular structure can be straight chained, branched, cyclic or macromolecular, i.e., an organic polymer chain bearing alkoxy functional end groups.

In one embodiment, the dipodal silane may be a polymer containing two silyl groups, each containing at least one hydrolysable group such as described by the following formula

(R⁷O)ₘ(Y¹)₃₋ₘ - Si (CH₂)ₓ - ((NHCH₂CH₂)ₜ - Q(CH₂)ₓ)ₛ - Si(OR⁷)ₘ(Y¹)₃₋ₘ

where R⁷ is a C₁₋₁₀ alkyl group, Y¹ is an alkyl groups containing from 1 to 8 carbons,
Q is a chemical group containing a heteroatom with a lone pair of electrons e.g., an amine, N-alkylamine or urea; each x is an integer of from 1 to 6, t is 0 or 1; each m is independently 1, 2 or 3 and s is 0 or 1.

Specific examples of suitable dipodal silanes include 1,6-bis (trimethoxysilyl)hexane (alternatively known as hexamethoxydisilylhexane), bis (trialkoxysilylalkyl)amines, bis (dialkoxyalkylsilylalkyl)amine, bis (trialkoxysilylalkyl) N-alkylamine, bis (dialkoxyalkylsilylalkyl) N-alkylamine, bis (trialkoxysilylalkyl)urea, bis (dialkoxyalkylsilylalkyl) urea, bis (3-trimethoxysilylpropyl)amine, bis (3-triethoxysilylpropyl)amine, bis (4-trimethoxysilylbutyl)amine, bis (4-triethoxysilylbutyl)amine, bis (3-trimethoxysilylpropyl)N-methylamine, bis (3-triethoxysilylpropyl) N-methylamine, bis (4-trimethoxysilylbutyl) N-methylamine, bis (4-triethoxysilylbutyl) N-methylamine, bis (3-trimethoxysilylpropyl)urea, bis (3-triethoxysilylpropyl)urea, bis (4-trimethoxysilylbutyl)urea, bis (4-triethoxysilylbutyl)urea, bis (3-dimethoxymethylsilylpropyl)amine, bis (3-diethoxymethyl silylpropyl)amine, bis (4-dimethoxymethylsilylbutyl)amine, bis (4- diethoxymethyl silylbutyl)amine, bis (3-dimethoxymethylsilylpropyl) N-methylamine, bis (3-diethoxymethyl silylpropyl) N-methylamine, bis (4-dimethoxymethylsilylbutyl) N-methylamine, bis (4- diethoxymethyl silylbutyl) N-methylamine, bis (3-dimethoxymethylsilylpropyl)urea, bis (3-diethoxymethyl silylpropyl)urea, bis (4-dimethoxymethylsilylbutyl)urea, bis (4- diethoxymethyl silylbutyl)urea, bis (3-dimethoxyethylsilylpropyl)amine, bis (3-diethoxyethyl silylpropyl)amine, bis (4-dimethoxyethylsilylbutyl)amine, bis (4- diethoxyethyl silylbutyl)amine, bis (3-dimethoxyethylsilylpropyl) N-methylamine, bis (3-diethoxyethyl silylpropyl) N-methylamine, bis (4-dimethoxyethylsilylbutyl) N-methylamine, bis (4- diethoxyethyl silylbutyl) N-methylamine, bis (3-dimethoxyethylsilylpropyl)urea bis (3-diethoxyethyl silylpropyl)urea, bis (4-dimethoxyethylsilylbutyl)urea and/or bis (4- diethoxyethyl silylbutyl)urea; bis (triethoxysilylpropyl)amine, bis (trimethoxysilylpropyl)amine, bis (trimethoxysilylpropyl)urea, bis (triethoxysilylpropyl)urea, bis (diethoxymethylsilylpropyl)N-methylamine; di or trialkoxy silyl terminated polydialkyl siloxane, di or trialkoxy silyl terminated polyarylalkyl siloxanes, di or trialkoxy silyl terminated polypropyleneoxide, polyurethane, polyacrylates; polyisobutylenes; di or triacetoxy silyl terminated polydialkyl; polyarylalkyl siloxane; di or trioximino silyl terminated polydialkyl; polyarylalkyl siloxane; di or triacetonoxy terminated polydialkyl or polyarylalkyl. The component (II) used may also comprise any combination of two or more of the above.

Other suitable silicon containing compounds having at least three hydroxyl and/or hydrolysable groups per molecule include for the sake of example, 1,3,5- tris(trialkoxysilylalkyl)isocyanurate for example a 1,3,5- tris(trialkoxysilylalkyl)isocyanurate having the following structure:

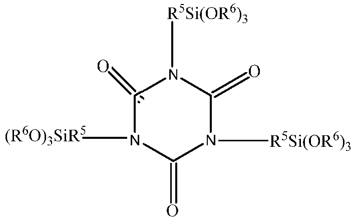

Wherein each R⁵ may be the same or different and is a divalent alkylene group having from 2 to 10 carbons, alternatively from 2 to 6 carbons, alternatively from 2 to 5 carbons and each R⁶ is the same or different and is an alkyl group having from 1 to 10 carbons alternatively from 1 to 6 carbons, alternatively from 1 to 4 carbons, alternatively a methyl group or an ethyl group. An example being tris-(trimethoxysilylpropyl) isocyanurate as depicted below where each R⁵ is a propylene group and each R⁶ is a methyl group.

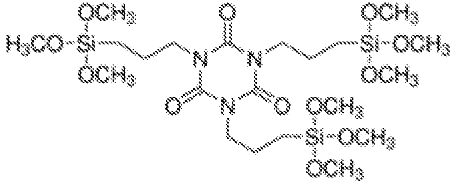

The one or more cross-linkers having at least 3 hydroxyl and/or hydrolysable groups per molecule (II) is present in an amount of from 0.1 to 5% by weight of the composition, present in an amount of from 0.5 to 4% by weight of the composition, alternatively in an amount of from 1 to 3.5% by weight of the composition.

### One or more reinforcing fillers (III)

The one or more reinforcing fillers identified as component (III) herein may for example be selected from precipitated silica, fumed silica, precipitated calcium carbonate, or a mixture of two or more thereof. Typically, the surface area of the reinforcing filler (III) is at least 15 m²/g in the case of precipitated calcium carbonate measured in accordance with the BET method (ISO 9277: 2010), alternatively 15 to 50 m²/g, alternatively 15 to 25 m²/g.

Silica reinforcing fillers have a typical surface area of at least 50 m²/g in accordance with the BET method (ISO 9277: 2010). In the case of high surface area fumed silica and/or high surface area precipitated silica, these may have surface areas of from 75 to 400 m²/g measured in accordance with the BET method (ISO 9277: 2010), alternatively of from 100 to 300 m²/g in accordance with the BET method (ISO 9277: 2010).

The reinforcing fillers (III) may be hydrophobically treated for example with one or more aliphatic acids, e.g., a fatty acid such as stearic acid or a fatty acid ester such as a stearate, or with organosilanes, organosiloxanes, or organosilazanes hexaalkyl disilazane or short chain siloxane diols to render the filler(s) hydrophobic and therefore easier to handle and obtain a homogeneous mixture with the other adhesive components. Specific examples organosilanes, organosiloxanes, or organosilazanes may include, but are not restricted to, silanol terminated trifluoropropylmethylsiloxane, silanol terminated vinyl methyl (ViMe) siloxane, silanol terminated methyl phenyl (MePh) siloxane, liquid hydroxyldimethyl-terminated polydiorganosiloxane containing an average from 2 to 20 repeating units of diorganosiloxane in each molecule, hydroxyldimethyl terminated phenylmethyl Siloxane, hexaorganodisiloxanes, such as hexamethyldisiloxane, divinyltetramethyldisiloxane; hexaorganodisilazanes, such as hexamethyldisilazane (HMDZ), divinyltetramethyldisilazane and tetramethyldi(trifluoropropyl)disilazane; hydroxyldimethyl terminated polydimethylmethylvinyl siloxane, octamethyl cyclotetrasiloxane, and silanes including but not limited to methyltrimethoxysilane, dimethyldimethoxysilane, vinyltrimethoxysilane, methyltriethoxysilane, vinyltriethoxysilane, chlorotrimethyl silane, dichlorodimethyl silane, trichloromethyl silane.

The surface treatment of the fillers makes them easily wetted by component (I). These surface modified fillers are preferably in a finely divided form and do not clump and can be homogeneously incorporated into the silicone polymer (I). This results in improved room temperature mechanical properties of the uncured compositions. The fillers may be pre-treated or may be treated in situ when being mixed with component (I). A small amount of water can be added together with the silica treating agent(s) as processing aid.

Depending on the filler(s) chosen the reinforcing fillers (III) may be present in an amount of from 2.5 to 60 % by weight (wt. %) of the composition. In the case when the selected fillers are precipitated silica and/or fumed silica or a combination thereof the inorganic fillers (III) are present in a range of from about 5.0 to 35 wt. % of the composition, alternatively of from 5 to 30 wt. % of the composition, alternatively of from 5 to 25 wt. % of the composition. However, when reinforcing filler (III) is precipitated calcium carbonate, the composition will tend to include a larger wt. % of the composition, e.g., from 25 to 60 wt. % of the composition, alternatively of from 30 to 60 wt. % of the composition, alternatively of from 35 to 55 wt. % of the composition. When component (III) is a mixture of silica and precipitated calcium carbonate the wt. % will typically somewhere therebetween.

### A catalyst comprising a tin (IV)-based compound,

Component (IV) comprises a condensation catalyst which increases the speed at which the composition cures.

Component (d), the tin (iv) catalyst may be any suitable tin (iv) based condensation cure catalyst. Examples of suitable tin (iv) based catalysts include tin triflates, dialkyltin compounds, selected from dimethyltin di-2-ethylhexanoate, dimethyltin dilaurate, di-n-butyltin diacetate (DBTDA), di-n-butyltin di-2-ethylhexanoate, dimethyltin dineodecanoate (DMTDN), dioctyltin dineodecanoate (DOTDN), di-n-butyltin dicaprylate, di-n-butyltin di-2,2-dimethyl octanoate, di-n-butyltin octanoate, di-n- butyltin dilaurate (DBTDL), di-n-butyltin distearate, di-n-butyltin dimaleate, di-n-butyltin dioleate, di-n-octyltin di-2-ethylhexanoate, di-n-octyltin di-2,2-dimethyl octanoate, di-n-octyltin dimaleate, Di-n-octyl tin dilaurate (DOTDL), di-n-butyl tin oxide, carbomethoxyphenyl tin trisuberate, tin butyrate, butyltintri-2-ethylhexoate, tin naphthenate, isobutyltintriceroate, tin octoate, triethyltin tartrate and di-n-octyl tin oxide. Said tin (iv) based condensation catalyst in an amount of from 0.001 to 0.1 % inclusive by weight (wt. %) of the composition.

### Optional Additives

Optional additives may be used if necessary. These may include non-reinforcing fillers, pigments, chain extenders, adhesion promotors rheology modifiers, cure modifiers, drying agents, extenders, flame retardants, plasticizers, end-blockers, anti-aging additives, UV absorbers, antioxidants, lightstabilizers, fungicides and/or biocides and the like, as well as combinations thereof. It will be appreciated that some of the additives may be included in more than one list of additives. Such additives would then have the ability to function in all the different ways referred to.

### Non-reinforcing fillers

Non-reinforcing fillers, which might be used in addition to component (III) herein include aluminite, calcium sulphate (anhydrite), gypsum, nepheline, svenite, quartz, calcium sulphate, magnesium carbonate, ground calcium carbonate, clays such as kaolin, aluminium trihydroxide, magnesium hydroxide (brucite), graphite, copper carbonate, e.g., malachite, nickel carbonate, e.g., zarachite, barium carbonate, e.g., witherite and/or strontium carbonate e.g., strontianite.

Aluminium oxide, silicates from the group consisting of olivine group; garnet group; aluminosilicates; ring silicates; chain silicates; and sheet silicates. The olivine group comprises silicate minerals, such as but not limited to, forsterite and Mg₂SiO₄. The garnet group comprises ground silicate minerals, such as but not limited to, pyrope; Mg₃Al₂Si₃O₁₂; grossular; and Ca₂Al₂Si₃O₁₂. Aluminosilicates comprise ground silicate minerals, such as but not limited to, sillimanite; Al₂SiO₅; mullite; 3Al₂O₃.2SiO₂; kyanite; and Al₂SiO₅.

The ring silicates group comprises silicate minerals, such as but not limited to, cordierite and Al₃(Mg,Fe)₂[Si₄AlO₁₈]. The chain silicates group comprises ground silicate minerals, such as but not limited to, wollastonite and Ca[SiO₃].

The sheet silicates group comprises silicate minerals, such as but not limited to, mica; K₂Al₁₄[Si₆Al₂O₂₀](OH)₄; pyrophyllite; Al₄[Si₈O₂₀](OH)₄; talc; Mg₆[Si₈O₂₀](OH)₄; serpentine for example, asbestos; Kaolinite; Al₄[Si₄O₁₀](OH)₈; and vermiculite.

Such additional fillers may also be hydrophobically treated in the same manner as component (III) as described above. When present the non-reinforcing fillers tend to be used to replace some of component (III), hence when component (III) the reinforcing filler is precipitated calcium carbonate and a non-reinforcing filler is also present in the composition the total amount of precipitated calcium carbonate and non-reinforcing filler will still be no more than the upper limit 60 wt. % of the composition. In one embodiment of the composition when component (III) is precipitated calcium carbonate the composition also comprises ground calcium carbonate. When present the non-reinforcing filler may be present in an amount of from greater than zero to 25 wt. % of the composition.

### Pigments

When present pigments and/or colorants may be coloured, white, black, metal effect, and luminescent e.g., fluorescent and phosphorescent. Pigments are utilized to colour the composition as required. Any suitable pigment may be utilized providing it is compatible with the composition herein. The one-part room temperature vulcanisable (RTV) silicone composition may contain white pigments and/or coloured (non-white) fillers e.g., carbon black.

Typically, the pigments and/or colorants, when particulates, have average particle diameters in the range of from 10 nm to 50 µm, preferably in the range of from 40 nm to 2 µm. The pigments and/or colorants when present are present in the range of from 2, alternatively from 3, alternatively from 5 to 20 wt. % of the composition.

### Rheology modifiers

Rheology modifiers which may be incorporated in the one-part room temperature vulcanisable (RTV) silicone composition comprising organopolysiloxane polymers having at least two alkoxy groups per molecule and a tin (IV)-based catalyst include silicone organic co-polymers such as those described in EP0802233 based on polyols of polyethers or polyesters; non-ionic surfactants selected from the group consisting of polyethylene glycol, polypropylene glycol, ethoxylated castor oil, oleic acid ethoxylate, alkylphenol ethoxylates, copolymers or ethylene oxide and propylene oxide, and silicone polyether copolymers; as well as silicone glycols. For some systems these rheology modifiers, particularly copolymers of ethylene oxide and propylene oxide, and silicone polyether copolymers, may enhance the adhesion to substrates, particularly plastic substrates.

### Adhesion Promoters

The one-part room temperature vulcanisable (RTV) silicone composition as hereinbefore described may also comprise an aminosilane adhesion promoter having two or three hydroxyl or alkoxy groups per molecule. The aminosilane adhesion promoter having two or three hydroxyl or alkoxy groups per molecule may comprise:

R¹⁰ₖ(R¹¹O)₃₋ₖSi-Z²-N(H)- (CH₂)_{m'} -NH₂

in which R¹⁰ is an alkyl group containing from 1 to 10 carbon atoms; each R¹¹ may be the same or different and is H or R¹⁰, Z² is a linear or branched alkylene group having from 2 to 10 carbon atoms, m' is from 2 to 10 and k is zero or 1.

R¹⁰ is an alkyl group containing from 1 to 10 carbon atoms, alternatively R¹⁰ is an alkyl group containing from 1 to 6 carbon atoms, alternatively, R¹⁰ is a methyl or ethyl group. Each R¹¹ may be the same or different and is each R¹¹ may be the same or different and is H or R¹⁰, alternatively each R¹¹ is R¹⁰. In one alternative all R¹¹ groups are the same. When the R¹¹ groups are the same, it is preferred that they are methyl or ethyl groups. Z² is a linear or branched alkylene group having from 2 to 10 carbons, alternatively from 2 to 6 carbons, for example Z² may be a propylene group, a butylene group or an isobutylene group. There may be from 2 to 10 m' groups, in one alterative m' may be from 2 to 6, in another alternative m' may be from 2 to 5, in a still further alternative m' may be 2 or 3, alternatively m' is 2.

Other adhesion promoters which may be used include N-(3-(Trimethoxysilyl)propyl)butylamine, bis(trimethoxysilylpropyl)amine, bis[3-(triethoxysilyl)propyl]amine, bis[3-(triethoxysilyl)propyl]amine, aminopropyltriethoxysilane and aminopropyltrimethoxysilane.

The adhesion promoter when present is present in an amount of from 0.1 to 3.75% by weight of the composition, alternatively, in an amount of 0.1- 2.5 % by weight of the composition, alternatively, in an amount of 0.1- 2.0 % by weight of the composition, alternatively, in an amount of 0.2 to 1.0 % by weight of the composition.

### UV and/or light stabilizers

UV and/or light stabilizers may include, for the sake of example include benzotriazole, ultraviolet light absorbers and/or hindered amine light stabilizers (HALS) such as the TINUVIN^{®} product line from Ciba Specialty Chemicals Inc.

### Biocides

Biocides may additionally be utilized in the composition if required. It is intended that the term "biocides" includes bactericides, fungicides and algicides, and the like.

The one-part room temperature vulcanisable (RTV) silicone composition as described above may be prepared by mixing all the ingredients together. Preferably once mixed, unless to be used immediately, the composition is sealed in one or more moisture-tight containers and is stored. In one embodiment filler (III) and/or pigment when present is/are first mixed into the polymer (I), optionally, if required in combination with a hydrophobic treating agent so that the filler and optional pigment may be hydrophobically treated in situ during the mixing into the polymer.

Once the filler is adequately mixed into the polymer (and if desired has been hydrophobically treated) then the remaining components are added in any suitable order to make the complete composition.

For example, in one method the process for making the one-part room temperature vulcanisable (RTV) silicone composition may comprise the following steps:-

In the preparation of both formulation 1 and 2 polymer 1 was alkoxy endcapped using the following process in a speed mixer:
1) A 1 wt. % solution of a suitable end-capping catalyst such as 1,5,7-Triazabicyclo[4.4.0]dec-5-ene (TBD) in methyl trimethoxy silane was initially prepared by dissolving TBD end-capping catalyst in methyl trimethoxy silane and then the vinyl trimethoxysilane was added to provide an end-capping catalyst solution;
2) The polymer, and any plasticiser, if present, are mixed;
3) The end-capping catalyst mixture was then introduced into the mixture resulting from step 2 above and this combination was then stirred for a pre-determined period of time (e.g., 10 to 45 minutes) at room temperature;

A one-part, organopolysiloxane elastomer composition utilising the product of the alkoxy end-capping reaction above was then prepared using the following further steps:-
4) the condensation cure catalyst and any adhesion promoter(s) when present (e.g., N-[3-(Trimethoxysilyl)propyl]ethylenediamine or 3-(Trimethoxysilyl)-propylamine are premixed if necessary to form a mixture 2;
5) mixture 2 is introduced into the mixer and everything was mixed for a further 5 minutes;
6) the fillers were then added gradually into the pot;
7) After the filler was thoroughly mixed hexamethyldisilazane was added; and
8) the composition was then further mixed under vacuum for 10 min after which the final one-part, organopolysiloxane elastomer compositions was packaged.

Because of the presence of alcohols, especially methanol as well as the tin catalyst in the above the polymer is vulnerable to polymer backbone reversion with tin catalyst and/or the polymer will be easily degraded, causing very poor shelf life. The hexamethyldisilazane (HMDZ) was used as methanol scavenger to ensure better shelf life. However, the HMDZ is very reactive, and s easily hydrolyzed during storage with ammonia generated. The use of HMDZ in this situation magnifies the likelihood for bubble generation, on hot porous surfaces at temperatures of 40°C or more. However, by using the binder compositions containing at least 25 wt. % of binder as described herein e.g., pmma in the process described herein bubbling is significantly reduced.

The one-part room temperature vulcanisable (RTV) silicone composition comprising organopolysiloxane polymers having at least two alkoxy groups per molecule and a tin (IV)-based catalyst may be applied on to the continuous resilient binder film, in step (iii) by any suitable means such as by extrusion, coating, injection, knifing and rolling, typically dependent on the viscosity and ability to flow thereof on the continuous resilient binder film. Irrespective of the means of application, it was found that either no bubbles were formed or comparatively much fewer bubbles were formed in the one standard one-part room temperature vulcanisable (RTV) silicone compositions comprising organopolysiloxane polymers having at least two alkoxy groups per molecule and a tin (IV)-based catalyst when applied on top of a binder intermediate layer as opposed to be applied direct onto the substrate surface at 40°C or more as opposed to when the said standard one-part room temperature vulcanisable (RTV) silicone compositions are applied directly onto the hot porous substrate surface at a temperature of at least 40°C when much bubbling results leading to very poor adhesion. The reduction in the number and size of bubbles in the cured silicone sealant benefit to the construction industry in hot countries in which substrates regularly reach temperatures of over 40°C during the hottest parts of the day due to the heat from the sun etc. because the significant bubble formation with regards standard sealants has proven to be a major issue for the construction industry because it leads to surface blistering between the curing/cured sealant and the substrate surface resulting in poor adhesion therebetween, which is unacceptable. An additional advantage of the present process is that the continuous resilient binder film protects and insulates the one-part room temperature vulcanisable (RTV) silicone compositions from the temperature of the substrate which allows the user to have an increased working time compared to situations where the one-part room temperature vulcanisable (RTV) silicone compositions are applied directly onto the hot porous substrate at 40°C. These tend to cure very quickly at the temperatures concerned because after said one-part room temperature vulcanisable (RTV) silicone composition is applied to the hot porous substrate; it is exposed to atmospheric moisture causing it to undergo accelerated cure.

There is also provided a sealed porous substrate which is the product of the above process. The one-part room temperature vulcanisable (RTV) silicone compositions used herein may be used as a sealant or adhesive or as a weather seal or professional caulking or residential and industrial frame plate adhesive and sealant.

### Examples

All corporate test methods (CTM) referred to herein are available to the public from Dow Silicones Corporation upon request.

A variety of binders and primers were assessed for use as or in the continuous resilient binder film as hereinbefore described. Commercial binders used in the examples were:
**DOWSIL^{™} 1200 OS Primer** is a Primer for silicone adhesives and sealants which is a colourless liquid having a viscosity at 23°C of 1 mPa.s, a closed cup flash point of 27°C, VOC inclusive of 76g/l and a specific gravity at 23°C of 0.84 (all values taken from datasheet). It does not contain any polymethylmethacrylate.
**DOWSIL^{™} Primer-C** is a solvent-based silane primer suitable for a variety of applications which has a coverage Rate, nonporous substrates of 800 ft² /gallon (16.33m² per litre), a specific gravity of 0.90, a Color Flash point -4°C and a VOC Content1 855 g/L based on South Coast Air Quality Management District of California. Maximum VOC. (all values taken from datasheet). It contains about 5wt. % of a methacrylate polymer in the composition.
**DOWSIL^{™} Construction Primer P** is a primer in the form of a proprietary alkoxy silane resin formulation in solvent for use on masonry surfaces. It is a clear liquid, having a specific Gravity (ASTM D 1298) of 0.95, a Flash Point (Closed Cup) of 8°C, Sealant Application Time at 25°C of between 0.5 and 8 hours and a VOC Content of 748 g/L Based on South Coast Air Quality Management District of California. Maximum VOC. (all values taken from datasheet). It contains about 20 wt. % of a polyacrylate in the composition.
**DOWSIL^{™} Construction Primer B** is a film forming primer for use on porous and metal substrates which is a clear liquid, has a Specific Gravity (ASTM D 1298) of 0.97, a Flash Point (Closed Cup) of 26°C Sealant Application Time at 25°C of between 0.5 and 8 hours, a VOC Content of 577 g/L Based on South Coast Air Quality Management District of California. Maximum VOC. (all values taken from datasheet). It contains about 40 wt. % of a methacrylate polymer in the composition. Two silicone resin materials were also used:
   **DT silicone resin solution.** The DT silicone resin solution used was a clear/cloudy solution having about 70 wt. % of DT silicone resin in toluene (CTM 0208) with a viscosity of about 950 mPa. s at 25°C (CTM 0004). The DT silicone resin is made up of D units and T units

   D = (R⁴R⁵SiO_{2 2}), T = (R⁶SiO_{3/2})

With contains 0.65 mole fraction of D units (where R⁴ and R⁵ are methyl groups), 0.09 mole fraction of T units where R⁶ are methyl groups and 0.26 mole fraction of T units with R⁶ being phenyl) Furthermore, a binder solution was also prepared:
**Polymethylmethacrylate (PMMA) solution.** The polymethylmethacrylate solution was a 30 wt. % solution of polymethylmethacrylate in 70 wt. % toluene. The PMMA used for this example and film was PLEXIGLAS^{™} 6N, from Röhm GmbH of Darmstadt Germany.

All of the commercial primers used are commercially available from Dow Silicones Corporation of Midland Michigan USA.

In a first series of examples and comparative examples, a granite substrate at a temperature of about 50°C was initially coated with a layer of a continuous resilient binder film forming composition before being top-coated with a one-part room temperature vulcanisable (RTV) silicone composition. Two one-part room temperature vulcanisable (RTV) silicone composition were prepared using a process described in WO2022041180, although stabilisation was not required given sealant compositions were being prepared immediately. The ingredients used to make the sealant compositions are tabulated in Table 1 below:

**Table 1. Ingredients used in preparation of Sealant formulations 1 and 2**

| | **Formⁿ 1 (wt. %)** | **Formⁿ 2 (wt. %)** |
|---|---|---|
| Polymer 1 | 35.2 | 59.51 |
| Vinyl trimethoxy silane (VTM) | 1.2 | 1.5 |
| Methyl trimethoxy silane (MTM) | 1.2 | 1.2 |
| 1 wt. %TBD in MTM | 0.3 | 0.3 |
| Polymer 2 | 10 | 25 |
| Ground calcium carbonate | 45 | |
| Fumed silica | 4.61 | 10 |
| Dibutyl tin dilaurate (DBTDL) | 0.09 | 0.09 |
| N-[3-(Trimethoxysilyl)propyl]ethylenediamine | 0.9 | |
| 3-(Trimethoxysilyl)-propylamine | | 0.9 |
| Hexamethyldisilazane (HMDZ) | 1.5 | 1.5 |
| Total | 100 | 100 |

**Polymer 1** indicated in Table 1 was a dimethylsilanol terminated polydimethylsiloxane having a viscosity of about 50,000mPa.s which was alkoxy end-capped during the reaction described below; The viscosity of polymer 1 may be measured by any suitable method such as in accordance with corporate test method CTM 0050, which is publicly available, and which is based on ASTM D 1084-16 method B, using a Brookfield DV-III Ultra Rheometer equipped with a cone-and-plate geometry using spindle 52 at 5 rpm for 2min.

**TBD** was 1,5,7-Triazabicyclo[4.4.0]dec-5-ene.

**Polymer 2** was a trimethyl terminated polydimethylsiloxane having a viscosity of about 100mPa.s at 25°C which is commercially available as DOWSII^{™} 200 Fluid from Dow Silicones Corporation of Midland Michigan USA;

The **GCC** used was type 203A commercially available from Qunxin Powder Technology C. Ltd of Yangzhou, Jiangsu, Province, China;

The **fumed silica** used is commercially available from Wacker as HDK^{™} V15D

In the preparation of both formulation 1 and 2 polymer 1 was alkoxy endcapped using the following process in a speed mixer:
1) A 1 wt. % solution of TBD end-capping catalyst in methyl trimethoxy silane was initially prepared by dissolving TBD end-capping catalyst in methyl trimethoxy silane and then the vinyl trimethoxysilane was added to provide an end-capping catalyst solution;
2) The polymer, and plasticiser were mixed together in a 10 litre Turello mixer at about 400 rpm;
3) The end-capping catalyst mixture was then introduced into the mixture resulting from step 2 above and this combination was then stirred at 400 rpm for 15 minutes at room temperature;
   To generate the one-part, organopolysiloxane elastomer composition utilising the product of the alkoxy end-capping reaction above, the following further steps were undertaken:-
   4) the condensation cure catalyst and adhesion promoter(s) N-[3-(Trimethoxysilyl)propyl]ethylenediamine for formulation 1 and 3-(Trimethoxysilyl)-propylamine for formulation 2 were premixed to form a mixture 2;
   5) mixture 2 was introduced into the mixer and everything was mixed for a further 5 minutes;
   6) the fillers were then added. These were calcium carbonate and silica in formulation 1 and just silica in formulation 2. The fillers were added gradually into the pot;
   7) After the filler was thoroughly mixed hexamethyldisilazane was added; and
   8) the composition was then further mixed under vacuum for 10 min after which the final one-part, organopolysiloxane elastomer compositions was packaged.

In order to enhance the level of bubbling which might occur, the one-part room temperature vulcanisable (RTV) silicone composition was aged for a period of two weeks at 50°C prior to undergoing this assessment as it has been identified that the bubbling effect is most noticeable if the sealant composition applied has been stored for a period of time before use.

The granite substrates were cleaned using isopropyl alcohol and then heated to approximately 50°C. Subsequently, the binder composition being tested was applied by brush and then left to dry through evaporation of the solvent to obtain a binder-coated granite substrate. The binder-coated granite substrate was then heated in the oven for 30 minutes to ensure same was at a temperature of at least 50°C at the time of application of the sealant composition. The binder-coated granite substrate was removed from the oven, had the sealant composition coated onto top of the binder coating and then was immediately returned to the oven to maintain the sealant at about 50°C for the cure process. After cure each sample was visually assessed first to see if any surface blistering on the sealant surface was evident, and then the sealant layer was cut from one side to check if bubbles were present on the interface between the sealant and substrate. The results are provided with respect to formulation 1 in Tables 2a and 2b and with respect to formulation 2 in Tables 3a and 3b with respect to formulation 2.

**Table 2a: Bubbling Status of Ref. 1 and comparatives C. 1 to 3 using Silicone sealant formulation 1**

| | Ref. 1 | C. 1 | C. 2 | C. 3 |
|---|---|---|---|---|
| Binder/film forming agent | / | 1200 OS | Primer C | Primer P |
| Polyacrylate content in Binder | / | 0 | 5% | 20% |
| Substrate | Granite | Granite | Granite | Granite |
| Binder Film Appearance | NA | poor | poor | poor |
| Description for bubbling status | Many bubbles | Many bubbles | Many bubbles | Many bubbles |
| Score for bubbling status | 5 | 5 | 5 | 5 |

The scoring criteria for the bubbling status was as follows:
1 = No bubbling observed;
2 = very minimal bubbling, no impact on adhesion;
3 = some bubbling, may have negative impact on adhesion;
4 = obvious bubbling observed, negatively impact adhesion;
5 = very significant bubbling observed, almost no adhesion (easily peeling off by hand).

The same criteria were used for all examples and comparatives. In Reference 1 the sealant composition (formulation 1) of Table 1 was applied directly onto the granite surface and consequently, as expected, a high level of bubbling was observed. It was also noted that, as anticipated, the sealant composition (formulation 1) had poor adhesion to the granite and was easily peeled off after curing.

In the cases of comparatives C. 1, C. 2 and C. 3, each had a primer applied, in C.1 it was DOWSIL^{™} 1200 OS Primer, which contained no binder, in C. 2 it was DOWSIL^{™} Primer-C which comprised about 5 wt. % of a polymethylmethacrylate and in C. 3 it was DOWSIL^{™} Construction Primer P which comprised about 20 wt. % of a polymethylmethacrylate. In these cases, given the lack of or low level of binder content, the primer coatings were very thin with thickness around 5-20um. The thickness of standard primer (non-film forming) coatings applied onto substrates are typically no more than 12.5µm thick which is much thinner than the continuous resilient binder film layers as described herein of at least 30µm but typically up to about 50µm. Whilst the thickness of the coating was not measured, the thickness of standard primer (non-film forming) coatings applied onto substrates are typically no more than 12.5µm thick which is much thinner than the continuous resilient binder film layers as described herein of at least 20µm but typically up to about 30µm. It was observed that the coating was discontinuous on the porous substrate and as such was identified as poor in the table 2a. For general primers, especially when some solvents with low boiling point were used in the formulation, it was found that whilst they may enhance adhesion between the substrate and the sealant, they are not substantial enough to block the moisture channels through capillary tubes in the substrates at elevated temperature.

Although not quantified it seemed that the presence of the continuous binder film between the hot granite surface and the one-part room temperature vulcanisable (RTV) silicone composition (formulation 1) in C. 1 to 3 resulted in better adhesion between the hot granite at about 50°C and the resulting silicone sealant, however there was no or minimal difference with respect to bubbling. This teaches that it is not the application per se of primers onto the substrate surface which prevents or minimises the bubbling.

**Table 2b: Bubbling Status of Ex. 1 to Ex. 3 using Sealant Formulation 1**

| | Ex. 1 | Ex. 2 | Ex. 3 |
|---|---|---|---|
| Primer/ film forming agent | PMMA Solⁿ | Primer B | DT resin |
| Polyacrylate or resin content | 30% | 40% | 70% |
| Substrate | Granite | Granite | Granite |
| Binder Film Appearance | Res^{t} | Res^{t} | Res^{t} |
| Description for bubbling status | Few to some bubbles | few bubbles | Very few bubbles |
| Score for bubbling status | 2.5 | 2 | 1.5 |

In Table 2b Res^{t} means resilient.

In contrast, in Ex. 1, Ex. 2 and Ex. 3 the binder compositions used to coat the granite surface comprised a 30 wt. % PMMA Solⁿ, DOWSIL^{™} Construction Primer B which contains 40 wt. % of binder and 70% of DT resin binder respectively. In each case, Ex. 1, Ex. 2 and Ex. 3 significantly reduced bubbling in the one-part room temperature vulcanisable (RTV) silicone composition (formulation 1) when applied onto the binder composition layer. Hence, when comparing the results in Table 2a with those of Table 2b, it can be seen that when formulation 1, a calcium carbonate filled alkoxy sealant, was applied onto 50°C granite substrate, if no binder composition layer or a binder composition layer with a binder content of below 30% were used (Table 2a) many bubbles appeared in the cured sealant, whilst when binder compositions containing greater binder contents were used the bubbling issue was mitigated significantly (Ex. 1 to 3).

A second series of examples were then produced comparing reference examples Ref. 2 and comparatives C. 4 to C. 6 using the sealant composition of formulation 2 in Table 1 above. These were compared directly to Ex. 4 to 6 in which the PMMA solution, primer B and the DT silicone resin were utilised as the binder composition respectively. The results are depicted below in Tables 3a and 3b.

**Table 3a: Bubbling Status of Ref. 2 and Comparative Examples 4 to 6 with Sealant Formulation 2**

| | Ref. 2 | Comp. 4 | Comp. 5 | Comp. 6 |
|---|---|---|---|---|
| Binder/film forming agent | / | OS-1200 | Primer C | Primer P |
| Polyacrylate content in Binder | / | 0 | 5% | 20% |
| Substrate | Granite | Granite | Granite | Granite |
| Binder Film Appearance | NA | poor | poor | poor |
| Description for bubbling status | Many bubbles | Many bubbles | Many bubbles | Many bubbles |
| Score for bubbling status | 5 | 5 | 5 | 5 |

**Table 3b: Bubbling Status of Examples Ex. 4 to Ex. 6 with Sealant Formulation 2**

| | Ex. 4 | Ex. 5 | Ex. 6 |
|---|---|---|---|
| Primer/ film forming agent | PMMA solution | Primer B | DT resin |
| Polyacrylate or resin content | 30% | 40% | 70% |
| Substrate | Granite | Granite | Granite |
| Binder Film Appearance | Res^{t} | Res^{t} | Res^{t} |
| Description for bubbling status | Some bubbles | Few bubbles | Few bubbles |
| Score for bubbling status | 3 | 2 | 2 |

Analogous results were obtained when comparing Ref. 2 and comparatives C. 4 to 6 as depicted in Table 3a with Ex. 4, Ex. 5 and Ex. 6 in each case using sealant formulation 2 as depicted in Table 1. In each case, Ex. 4, Ex. 5 and Ex. 6 significantly reduced bubbling in the one-part room temperature vulcanisable (RTV) silicone composition (formulation 2) when applied onto the binder composition layer. Hence, when comparing the results in Table 3a with those of Table 3b, it can be seen that when formulation 2, was applied onto a granite substrate at about 50°C, if no binder composition layer or a binder composition layer with a binder content of below 30% were used (Table 3a) many bubbles appeared in the cured sealant, whilst when binder compositions containing greater binder contents were used the bubbling issue was mitigated significantly (Ex. 4 to 6).

## Claims

1. A method of applying a one-part room temperature vulcanisable (RTV) silicone composition comprising organopolysiloxane polymers having at least two alkoxy groups per molecule and a tin (IV)-based catalyst onto a hot porous substrate at a temperature of at least 40°C comprising the steps of
(i) Applying
a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q_{(d)}
Where 0<a<1, b≥0, c ≥ 0, d ≥ 0, c + d is >0, a + b + c + d= 1, and a + d ≠ 1 when a, b, c and d are mole fractions, or a mixture of two or more thereof;
onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two alkoxy groups per molecule and a tin (IV)-based catalyst on the surface of the continuous resilient binder film.

2. A method in accordance with claim 1 wherein the hot porous substrate is selected from stone, marble, brick, concrete, cement and other cementitious substrates.

3. A method in accordance with claim 1 or 2 wherein the solvent is selected from naphtha, toluene, heptane, methylisobutyl ketone, butyl acetate, and xylene, other mineral spirits, tert butyl acetate, methyl acetate, ethyl acetate, n-butyl acetate, methyl formate, ethyl formate, and any combination thereof.

4. A method in accordance with any preceding claim wherein the solvent borne binder composition comprises a non-aqueous solvent and from 25 to 75 wt. % of said binder in the composition.

5. A method in accordance with any preceding claim wherein the solvent borne binder composition is a primer or a modified primer containing from 25 to 75 wt. % of said binder in the composition.

6. A method in accordance with any preceding claim wherein the binder is a (meth)acrylic resin or DT silicone resin.

7. A sealed hot porous substrate at a temperature of at least 40°C which is the product of the process of claims 1 to 6.

8. A sealed hot porous substrate at a temperature of at least 40°C coated with a cured layer of a one-part room temperature vulcanisable (RTV) silicone composition obtained or obtainable by
(i) Applying
a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q_{(d)}
Where 0<a<1, b≥0, c ≥ 0, d ≥ 0, c + d is >0, a + b + c + d= 1, and a + d ≠ 1 when a, b, c and d are mole fractions, or a mixture of two or more thereof;
onto the surface of a hot porous substrate at a temperature of at least 40°C;
(ii) allowing the waterborne or solvent borne binder composition to dry and/or cure enabling the binder to coalesce and form a continuous resilient binder film on the hot porous substrate, and then
(iii) applying and curing a one-part room temperature vulcanisable (RTV) silicone composition comprising organopolysiloxane polymers having at least two alkoxy groups per molecule and a tin (IV)-based catalyst on the surface of the continuous resilient binder film.

9. A sealed hot porous substrate at a temperature of at least 40°C in accordance with claim 7 or 8 having a continuous resilient binder film which is at least 30µm thick.

10. A sealed hot porous substrate at a temperature of at least 40°C in accordance with any one of claims 7, 8 or 9 wherein the hot porous substrate is selected from stone, marble, brick, concrete, cement and other cementitious substrates.

11. Use of
a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q_{(d)}
Where 0<a<1, b≥0, c ≥ 0, d ≥ 0, c + d is >0, a + b + c + d= 1, and a + d ≠ 1 when a, b, c and d are mole fractions, or a mixture of two or more thereof in a method for applying a one-part room temperature vulcanisable (RTV) silicone composition comprising organopolysiloxane polymers having at least two alkoxy groups per molecule and a tin (IV)-based catalyst on to a hot porous substrate at a temperature of at least 40°C comprising the steps of
applying waterborne or solvent borne binder composition comprising at least 25 wt. % of said binder onto the surface of a hot porous substrate at a temperature of at least 40°C;
allowing the waterborne or solvent borne binder composition comprising at least 25 wt. % of said binder to dry and/or cure enabling the binder to coalesce and form a continuous resilient binder film on the hot porous substrate; and then
applying and curing a one-part room temperature vulcanisable (RTV) silicone composition comprising organopolysiloxane polymers having at least two alkoxy groups per molecule and a tin (IV)-based catalyst on the surface of the continuous resilient binder film.

12. Use in accordance with claim 11 wherein the continuous resilient binder film prevents or minimises the generation of bubbles in said one-part room temperature vulcanisable (RTV) silicone composition whilst curing on a hot porous substrate at a temperature of at least 40°C.

13. Use of the method in accordance with claims 1 to 6 for weather sealing a hot porous substrate at a temperature of at least 40°C whilst preventing or minimising the generation of bubbles in said one-part room temperature vulcanisable (RTV) silicone composition whilst curing at a temperature of at least 40°C.

14. Use in accordance with either claim 12 or 13 wherein the hot porous substrate is selected from stone, marble, brick, concrete, cement and other cementitious substrates.

15. A method for filling a space between a first substrate and a second substrate, at least one of which is a hot porous substrate at a temperature of at least 40°C, so as to create a seal therebetween, which seal has a cured layer of a one-part room temperature vulcanisable (RTV) silicone composition comprising:
(i) Applying
a waterborne or solvent borne binder composition comprising at least 25 wt. % of said binder selected from (meth)acrylic resin, poly(meth)acrylic acid, polyvinyl acetate, polyvinylpyrrolidone, polyvinyl butyral, polyurethane and a silicone resin of the structure
M₍ₐ₎D_{(b)}T_{(c)}Q_{(d)}
Where 0<a<1, b≥0, c ≥ 0, d ≥ 0, c + d is >0, a + b + c + d= 1, and a + d ≠ 1 when a, b, c and d are mole fractions, or a mixture of two or more thereof;
at least partially onto the surface of the hot porous substrate at a temperature of at least 40°C;
(ii) allowing the waterborne or solvent borne binder composition to dry and/or cure enabling the binder to coalesce and form a continuous resilient binder film on at least the hot porous substrate; and then
(iii) applying and curing a one-part room temperature vulcanisable (RTV) silicone composition comprising organopolysiloxane polymers having at least two alkoxy groups per molecule and a tin (IV)-based catalyst on the surface of the continuous resilient binder film.

## Patentansprüche

1. Verfahren zum Aufbringen einer einteiligen, bei Raumtemperatur vulkanisierbaren (RTV) Silikonzusammensetzung, umfassend Organopolysiloxanpolymere, die mindestens zwei Alkoxygruppen pro Molekül und einen Zinn(IV)-basierten Katalysator aufweisen, auf ein heißes poröses Substrat bei einer Temperatur von mindestens 40 °C, umfassend die Schritte
(i) Aufbringen
einer Bindemittelzusammensetzung auf Wasserbasis oder auf Lösungsmittelbasis, umfassend zu mindestens 25 Gew.-% das Bindemittel, das ausgewählt ist aus (Meth)acrylharz, Poly(meth)acrylsäure, Polyvinylacetat, Polyvinylpyrrolidon, Polyvinylbutyral, Polyurethan und einem Silikonharz der Struktur
M₍ₐ₎D_{(b)}T_{(c)}Q_{(d)}
wobei 0<a<1, b ≥ 0, c ≥ 0, d ≥ 0, c + d >0 ist, a + b + c + d = 1 und a + d ≠ 1, wenn a, b, c und d Molfraktionen sind, oder eine Mischung aus zwei oder mehr davon;
auf die Oberfläche eines heißen porösen Substrats bei einer Temperatur von mindestens 40 °C;
(ii) Erlauben der Bindemittelzusammensetzung auf Wasserbasis oder auf Lösungsmittelbasis, zu trocknen und/oder auszuhärten, was dem Bindemittel ermöglicht, zu koaleszieren und einen kontinuierlichen, elastischen Bindemittelfilm auf dem heißen, porösen Substrat auszubilden, und dann
(iii) Aufbringen und Härten einer einteiligen, bei Raumtemperatur vulkanisierbaren (RTV) Silikonzusammensetzung, umfassend Organopolysiloxanpolymere, die mindestens zwei Alkoxygruppen pro Molekül und einen Zinn(IV)-basierten Katalysator aufweisen, auf der Oberfläche des kontinuierlichen, elastischen Bindemittelfilms.

2. Verfahren nach Anspruch 1, wobei das heiße poröse Substrat aus Stein, Marmor, Ziegel, Beton, Zement und anderen zementartigen Substraten ausgewählt wird.

3. Verfahren nach Anspruch 1 oder 2, wobei das Lösungsmittel aus Naphtha, Toluol, Heptan, Methylisobutylketon, Butylacetat und Xylol, anderen Lösungsbenzinen, tert-Butylacetat, Methylacetat, Ethylacetat, n-Butylacetat, Methylformiat, Ethylformiat und einer beliebigen Kombination davon ausgewählt wird.

4. Verfahren nach einem der vorstehenden Ansprüche, wobei die Bindemittelzusammensetzung auf Lösungsmittelbasis ein nichtwässriges Lösungsmittel und zu 25 bis 75 Gew.-% das Bindemittel in der Zusammensetzung umfasst.

5. Verfahren nach einem der vorstehenden Ansprüche, wobei die Bindemittelzusammensetzung auf Lösungsmittelbasis ein Primer oder ein modifizierter Primer ist, enthaltend zu 25 bis 75 Gew.-% das Bindemittel in der Zusammensetzung.

6. Verfahren nach einem der vorstehenden Ansprüche, wobei das Bindemittel ein (Meth)acrylharz oder DT-Silikonharz ist.

7. Versiegeltes, heißes, poröses Substrat bei einer Temperatur von mindestens 40 °C, das das Produkt des Prozesses nach den Ansprüchen 1 bis 6 ist.

8. Versiegeltes, heißes, poröses Substrat bei einer Temperatur von mindestens 40 °C, beschichtet mit einer gehärteten Schicht einer einteiligen, bei Raumtemperatur vulkanisierbaren (RTV) Silikonzusammensetzung, erhalten oder erhältlich durch (i) Aufbringen
einer Bindemittelzusammensetzung auf Wasserbasis oder auf Lösungsmittelbasis, umfassend zu mindestens 25 Gew.-% das Bindemittel, das ausgewählt ist aus (Meth)acrylharz, Poly(meth)acrylsäure, Polyvinylacetat, Polyvinylpyrrolidon, Polyvinylbutyral, Polyurethan und einem Silikonharz der Struktur
M₍ₐ₎D_{(b)}T_{(c)}Q_{(d)}
wobei 0<a<1, b ≥ 0, c ≥ 0, d ≥ 0, c + d >0 ist, a + b + c + d = 1 und a + d ≠ 1, wenn a, b, c und d Molfraktionen sind, oder eine Mischung aus zwei oder mehr davon;
auf die Oberfläche eines heißen porösen Substrats bei einer Temperatur von mindestens 40 °C;
(ii) Erlauben der Bindemittelzusammensetzung auf Wasserbasis oder auf Lösungsmittelbasis, zu trocknen und/oder auszuhärten, was dem Bindemittel ermöglicht, zu koaleszieren und einen kontinuierlichen, elastischen Bindemittelfilm auf dem heißen, porösen Substrat auszubilden, und dann
(iii) Aufbringen und Härten einer einteiligen, bei Raumtemperatur vulkanisierbaren (RTV) Silikonzusammensetzung, umfassend Organopolysiloxanpolymere, die mindestens zwei Alkoxygruppen pro Molekül und einen Zinn(IV)-basierten Katalysator aufweisen, auf der Oberfläche des kontinuierlichen, elastischen Bindemittelfilms.

9. Versiegeltes, heißes, poröses Substrat bei einer Temperatur von mindestens 40 °C nach Anspruch 7 oder 8, das einen durchgehenden, elastischen Bindemittelfilm aufweist, der mindestens 30 µm dick ist.

10. Versiegeltes heißes poröses Substrat bei einer Temperatur von mindestens 40 °C nach einem der Ansprüche 7, 8 oder 9, wobei das heiße poröse Substrat aus Stein, Marmor, Ziegel, Beton, Zement und anderen zementartigen Substraten ausgewählt ist.

11. Verwendung einer Bindemittelzusammensetzung auf Wasserbasis oder auf Lösungsmittelbasis, umfassend mindestens zu 25 Gew.-% das Bindemittel, das ausgewählt ist aus (Meth)acrylharz, Poly(meth)acrylsäure, Polyvinylacetat, Polyvinylpyrrolidon, Polyvinylbutyral, Polyurethan und einem Silikonharz der Struktur
M₍ₐ₎D_{(b)}T_{(c)}Q_{(d)}
wobei 0<a<1, b≥0, c ≥ 0, d ≥ 0, c + d >0 ist, a + b + c + d= 1 und a + d ≠ 1, wenn a, b, c und d Molfraktionen sind oder eine Mischung von zwei oder mehr davon, in einem Verfahren zum Aufbringen einer einteiligen, bei Raumtemperatur vulkanisierbaren (RTV) Silikonzusammensetzung, umfassend Organopolysiloxanpolymere, die mindestens zwei Alkoxygruppen pro Molekül und einen Zinn(IV)-basierten Katalysator aufweisen, auf ein heißes poröses Substrat bei einer Temperatur von mindestens 40 °C, umfassend die Schritte
Aufbringen einer Bindemittelzusammensetzung auf Wasserbasis oder auf Lösungsmittelbasis, umfassend zu mindestens 25 Gew.-% das Bindemittel, auf die Oberfläche eines heißen porösen Substrats bei einer Temperatur von mindestens 40 °C;
Erlauben, dass die Bindemittelzusammensetzung auf Wasserbasis oder auf Lösungsmittelbasis, umfassend zu mindestens 25 Gew.-% das Bindemittel, trocknet und/oder härtet, was dem Bindemittel ermöglicht, zu koaleszieren und einen kontinuierlichen, elastischen Bindemittelfilm auf dem heißen, porösen Substrat zu bilden; und dann
Aufbringen und Härten einer einteiligen, bei Raumtemperatur vulkanisierbaren (RTV) Silikonzusammensetzung, umfassend Organopolysiloxanpolymere, die mindestens zwei Alkoxygruppen pro Molekül und einen Zinn(IV)-basierten Katalysator aufweisen, auf der Oberfläche des kontinuierlichen, elastischen Bindemittelfilms.

12. Verwendung nach Anspruch 11, wobei der kontinuierliche, elastische Bindemittelfilm die Generierung von Blasen in der einteiligen, bei Raumtemperatur vulkanisierbaren (RTV) Silikonzusammensetzung verhindert oder minimiert, während sie auf einem heißen, porösen Substrat bei einer Temperatur von mindestens 40 °C aushärtet.

13. Verwendung des Verfahrens nach Ansprüchen 1 bis 6 zum Wetterversiegeln eines heißen, porösen Substrats bei einer Temperatur von mindestens 40 °C, wobei die Generierung von Blasen in der einteiligen, bei Raumtemperatur vulkanisierbaren (RTV) Silikonzusammensetzung verhindert oder minimiert wird, während sie bei einer Temperatur von mindestens 40 °C aushärtet.

14. Verwendung nach Anspruch 12 oder 13, wobei das heiße poröse Substrat aus Stein, Marmor, Ziegel, Beton, Zement und anderen zementartigen Substraten ausgewählt ist.

15. Verfahren zum Füllen eines Raums zwischen einem ersten Substrat und einem zweiten Substrat, von denen mindestens eines ein heißes poröses Substrat bei einer Temperatur von mindestens 40 °C ist, um dazwischen eine Abdichtung zu erzeugen, wobei die Abdichtung eine ausgehärtete Schicht aus einer einteiligen, bei Raumtemperatur vulkanisierbaren (RTV) Silikonzusammensetzung aufweist, umfassend:
(i) Aufbringen
einer Bindemittelzusammensetzung auf Wasserbasis oder auf Lösungsmittelbasis, umfassend zu mindestens 25 Gew.-% das Bindemittel, das ausgewählt ist aus (Meth)acrylharz, Poly(meth)acrylsäure, Polyvinylacetat, Polyvinylpyrrolidon, Polyvinylbutyral, Polyurethan und einem Silikonharz der Struktur
M₍ₐ₎D_{(b)}T_{(c)}Q_{(d)}
wobei 0<a<1, b ≥ 0, c ≥ 0, d ≥ 0, c + d >0 ist, a + b + c + d = 1 und a + d ≠ 1, wenn a, b, c und d Molfraktionen sind, oder eine Mischung aus zwei oder mehr davon;
mindestens teilweise auf die Oberfläche des heißen porösen Substrats bei einer Temperatur von mindestens 40 °C;
(ii) Erlauben der Bindemittelzusammensetzung auf Wasserbasis oder auf Lösungsmittelbasis zu trocknen und/oder auszuhärten, was dem Bindemittel ermöglicht, zu koaleszieren und einen kontinuierlichen, elastischen Bindemittelfilm auf mindestens dem heißen, porösen Substrat auszubilden; und dann
(iii) Aufbringen und Härten einer einteiligen, bei Raumtemperatur vulkanisierbaren (RTV) Silikonzusammensetzung, umfassend Organopolysiloxanpolymere, die mindestens zwei Alkoxygruppen pro Molekül und einen Zinn(IV)-basierten Katalysator aufweisen, auf der Oberfläche des kontinuierlichen, elastischen Bindemittelfilms.

## Revendications

1. Procédé d'application d'une composition de silicone vulcanisable à température ambiante (RTV) à une partie, comprenant des polymères d'organopolysiloxane ayant au moins deux groupes alcoxy par molécule et un catalyseur à base d'étain (IV) sur un substrat poreux chaud à une température d'au moins 40 °C, comprenant les étapes consistant à
(i) appliquer
une composition de liant à base d'eau ou de solvant comprenant au moins 25 % en poids dudit liant choisi parmi résine (méth)acrylique, acide poly(méth)acrylique, acétate de polyvinyle, polyvinylpyrrolidone, butyral de polyvinyle, polyuréthane et une résine de silicone de la structure
M₍ₐ₎D_{(b)}T_{(c)}Q_{(d)}
où 0 < a < l, b ≥ 0, c ≥ 0, d ≥ 0, c + d est >0, a + b + c + d = 1, et a + d ≠ 1 lorsque a, b, c et d sont des fractions molaires, ou un mélange de deux de celles-ci ou plus ;
sur la surface d'un substrat poreux chaud à une température d'au moins 40 °C ;
(ii) laisser sécher et/ou durcir la composition de liant à base d'eau ou de solvant, permettant au liant de coalescer et de former un film de liant élastique continu sur le substrat poreux chaud, puis
(iii) appliquer et faire durcir une composition de silicone vulcanisable à température ambiante (RTV) à une partie, comprenant des polymères d'organopolysiloxane ayant au moins deux groupes alcoxy par molécule et un catalyseur à base d'étain (IV) sur la surface du film de liant élastique continu.

2. Procédé selon la revendication 1, dans lequel le substrat poreux chaud est choisi parmi pierre, marbre, brique, béton, ciment et autres substrats cimentaires.

3. Procédé selon la revendication 1 ou 2, dans lequel le solvant est choisi parmi naphta, toluène, heptane, méthylisobutylcétone, acétate de butyle, et xylène, autres essences minérales, acétate de tert-butyle, acétate de méthyle, acétate d'éthyle, acétate de n-butyle, formiate de méthyle, formiate d'éthyle, et toute combinaison de ceux-ci.

4. Procédé selon l'une quelconque revendication précédente, dans lequel la composition de liant à base de solvant comprend un solvant non aqueux et de 25 à 75 % en poids dudit liant dans la composition.

5. Procédé selon l'une quelconque revendication précédente, dans lequel la composition de liant à base de solvant est un apprêt ou un apprêt modifié contenant de 25 à 75 % en poids dudit liant est dans la composition.

6. Procédé selon l'une quelconque revendication précédente, dans lequel le liant est une résine (méth)acrylique ou une résine de silicone DT.

7. Substrat poreux chaud scellé à une température d'au moins 40 °C, qui est le produit du procédé selon les revendications 1 à 6.

8. Substrat poreux chaud scellé à une température d'au moins 40 °C, recouvert d'une couche durcie d'une composition de silicone vulcanisable à température ambiante (RTV) à une partie, obtenue ou pouvant être obtenue par
(i) l'application
d'une composition de liant à base d'eau ou de solvant comprenant au moins 25 % en poids dudit liant choisi parmi résine (méth)acrylique, acide poly(méth)acrylique, acétate de polyvinyle, polyvinylpyrrolidone, butyral de polyvinyle, polyuréthane et une résine de silicone de la structure
M₍ₐ₎O_{(b)}T_{(c)}Q_{(d)}
où 0 < a < l, b ≥ 0, c ≥ 0, d ≥ 0, c + d est >0, a + b + c + d = 1, et a + d ≠ 1 lorsque a, b, c et d sont des fractions molaires, ou un mélange de deux de celles-ci ou plus ;
sur la surface d'un substrat poreux chaud à une température d'au moins 40 °C ;
(ii) le fait de laisser sécher et/ou durcir la composition de liant à base d'eau ou de solvant, permettant au liant de coalescer et de former un film de liant élastique continu sur le substrat poreux chaud, puis
(iii) l'application et le durcissement d'une composition de silicone vulcanisable à température ambiante (RTV) à une partie, comprenant des polymères d'organopolysiloxane ayant au moins deux groupes alcoxy par molécule et un catalyseur à base d'étain (IV) sur la surface du film de liant élastique continu.

9. Substrat poreux chaud scellé à une température d'au moins 40 °C conformément à la revendication 7 ou 8, ayant un film de liant élastique continu d'une épaisseur d'au moins 30 µm.

10. Substrat poreux chaud scellé à une température d'au moins 40 °C conformément à l'une quelconque des revendications 7, 8 ou 9, dans lequel le substrat poreux chaud est choisi parmi pierre, marbre, brique, béton, ciment et autres substrats cimentaires.

11. Utilisation d'une composition de liant à base d'eau ou de solvant comprenant au moins 25 % en poids dudit liant choisi parmi résine (méth)acrylique, acide poly(méth)acrylique, acétate de polyvinyle, polyvinylpyrrolidone, butyral de polyvinyle, polyuréthane et une résine de silicone de la structure
M₍ₐ₎O_{(b)}T_{(c)}Q_{(d)}
où 0 < a < I, b ≥ 0, c ≥ 0, d ≥ 0, c + d est > 0, a + b + c + d = 1, et a + d ≠ 1 lorsque a, b, c et d sont des fractions molaires, ou un mélange de deux de celles-ci ou plus, dans un procédé d'application d'une composition de silicone vulcanisable à température ambiante (RTV) à une partie, comprenant des polymères d'organopolysiloxane ayant au moins deux groupes alcoxy par molécule et un catalyseur à base d'étain (IV) sur un substrat poreux chaud à une température d'au moins 40 °C, comprenant les étapes consistant à
appliquer une composition de liant à base d'eau ou de solvant comprenant au moins 25 % en poids dudit liant sur la surface d'un substrat poreux chaud à une température d'au moins 40 °C ;
laisser sécher et/ou durcir la composition de liant à base d'eau ou de solvant comprenant au moins 25 % en poids dudit liant, permettant au liant de coalescer et de former un film de liant élastique continu sur le substrat poreux chaud ; puis
appliquer et faire durcir une composition de silicone vulcanisable à température ambiante (RTV) à une partie, comprenant des polymères d'organopolysiloxane ayant au moins deux groupes alcoxy par molécule et un catalyseur à base d'étain (IV) sur la surface du film de liant élastique continu.

12. Utilisation selon la revendication 11, dans laquelle le film liant élastique continu empêche ou minimise la formation de bulles dans ladite composition de silicone vulcanisable à température ambiante (RTV) à une partie pendant son durcissement sur un substrat poreux chaud à une température d'au moins 40 °C.

13. Utilisation du procédé selon les revendications 1 à 6 permettant d'étanchéifier contre les intempéries un substrat poreux chaud à une température d'au moins 40 °C tout en empêchant ou en minimisant la formation de bulles dans ladite composition de silicone vulcanisable à température ambiante (RTV) à une partie pendant son durcissement à une température d'au moins 40 °C.

14. Utilisation selon l'une ou l'autre des revendications 12 ou 13, dans laquelle le substrat poreux chaud est choisi parmi pierre, marbre, brique, béton, ciment et autres substrats cimentaires.

15. Procédé de remplissage d'un espace entre un premier substrat et un second substrat, dont au moins l'un est un substrat poreux chaud à une température d'au moins 40 °C, de manière à créer un joint d'étanchéité entre eux, lequel joint a une couche durcie d'une composition de silicone vulcanisable à température ambiante (RTV) à une partie, comprenant :
(i) l'application
d'une composition de liant à base d'eau ou de solvant comprenant au moins 25 % en poids dudit liant choisi parmi résine (méth)acrylique, acide poly(méth)acrylique, acétate de polyvinyle, polyvinylpyrrolidone, butyral de polyvinyle, polyuréthane et une résine de silicone de la structure
M₍ₐ₎O_{(b)}T_{(c)}Q_{(d)}
où 0 < a < l, b ≥ 0, c ≥ 0, d ≥ 0, c + d est >0, a + b + c + d = 1, et a + d ≠ 1 lorsque a, b, c et d sont des fractions molaires, ou un mélange de deux de celles-ci ou plus ;
au moins partiellement sur la surface du substrat poreux chaud à une température d'au moins 40 °C ;
(ii) le fait de laisser sécher et/ou durcir la composition de liant à base d'eau ou de solvant, permettant au liant de coalescer et de former un film de liant élastique continu sur au moins le substrat poreux chaud ; puis
(iii) appliquer et faire durcir une composition de silicone vulcanisable à température ambiante (RTV) à une partie, comprenant des polymères d'organopolysiloxane ayant au moins deux groupes alcoxy par molécule et un catalyseur à base d'étain (IV) sur la surface du film de liant élastique continu.
